# EUROPEAN PATENT APPLICATION

(11) **EP 2 821 732 A1**
(43) Date of publication of application: **07.01.2015**
(21) Application number: 12869886.7
(22) Date of filing: 09.07.2012
(51) Int. Cl.: F25B 7/00, F25B 5/02, F25B 6/02

(54) **EXHAUST HEAT RECOVERY SYSTEM AND OPERATING METHOD THEREFOR**

(30) Priority: 02.03.2012 JP 2012046969
(71) Applicant: Hitachi, Ltd., Tokyo 100-8280 (JP)
(72) Inventor: KOKUGAN Yoko, Shiyoda-ku, Tokyo 100-8280 (JP); KOTANI Masanao, Shiyoda-ku, Tokyo 100-8280 (JP)
(74) Representative: MERH-IP Matias Erny Reichl Hoffmann
(86) International application number: PCT/JP2012/067420
(87) International publication number: WO 2013/128668

(57) **Abstract**

An object of the present invention is to provide an exhaust heat recovery system for suitably circulating refrigerants in an intermediate heat exchanger at the start of an exhaust heat recovery operation, and a method for operating the exhaust heat recovery system. There is provided an air-conditioning and hot water supply system 1 along with a method for operating the system 1 in which an air-conditioning refrigerant circuit 3 and a hot-water-supply refrigerant circuit 2 are thermally connected with each other via an intermediate heat exchanger 11; the air-conditioning refrigerant circuit 3 is equipped with a heat exchanger 32 on the air-conditioning heat source side arranged in parallel with the intermediate heat exchanger 11; and the hot-water-supply refrigerant circuit 2 is furnished with a heat exchanger 22 on the hot-water-supply use side arranged in parallel with the intermediate heat exchanger 11. At the start of an exhaust heat recovery operation in which the air-conditioning refrigerant circulating in the air-conditioning refrigerant circuit 3 releases the heat absorbed from an air-conditioning hot and cold water circuit 5 into the hot-water-supply refrigerant circulating in the hot-water-supply refrigerant circuit 2 via the intermediate heat exchanger 11, the inflow of the air-conditioning refrigerant into the heat exchanger 32 on the air-conditioning heat source side and the inflow of the hot-water-supply refrigerant into the heat exchanger 22 on the hot-water-supply use side are limited.

## Description

### Technical Field

The present invention relates to an exhaust heat recovery system and a method for operating the exhaust heat recovery system.

### Background Art

In the past, there have been exhaust heat recovery systems (air-conditioning and hot water supply systems) each having a multiple-heat source dual refrigeration cycle made up of an air-conditioning cycle and a hot water supply cycle, the air-conditioning cycle being a cycle in which a air-conditioning refrigerant circuit and a hot-water-supply refrigerant circuit are heat-exchangeably connected via an intermediate heat exchanger to permit cooling and heating operations, the hot water supply cycle being a cycle in which hot water supply operation is available (e.g., see Patent Literatures 1 through 3).

Patent Literature 1 discloses a heat pump having a high-temperature cycle for high-temperature output (hot water supply cycle) and an intermediate-temperature cycle for intermediate- or low-temperature output (air-conditioning cycle), the heat pump being configured to have a high-temperature cycle evaporator and an intermediate-temperature cycle evaporator heat-exchangeably connected with one another. According to the techniques disclosed in Patent Literature 1, the exhaust heat recovery operation can be performed by making the effective use of exhaust heat from the intermediate-temperature cycle in the high-temperature cycle so that the heat pump may be run economically.

Patent Literature 2 discloses an exhaust heat recovery system (air-conditioning equipment) capable of carrying out cooling operation, heating operation, hot water supply operation, cool storage operation, and cooling-heating-hot water supply operation. According to the techniques disclosed in Patent Literature 2, the above-mentioned operations can be switched from one operation to another in an efficient manner by use of multiple selector valves and expansion valves, so that the operations can be switched from one operation to another in an efficient manner.

Patent Literature 3 discloses an exhaust heat recovery system (air-conditioning and hot water supply system) that allows a natural circulation cycle heat exchanger to be utilized as a compression cycle heat exchanger. According to the techniques disclosed in Patent Literature 3, if the exhaust heat from cooling operation is less than the heat absorbed in hot water supply operation, a two-way valve is used to perform control such that the air-conditioning refrigerant does not flow inside the heat exchanger on the side of an air-conditioning heat source. This structure allows the exhaust heat from air-conditioning to be released into the hot-water-supply refrigerant circuit via the intermediate heat exchanger so that power consumption in the air-conditioning cycle may be reduced.

### Prior Art Literature

### Patent Literature

Patent Literature 1
   JP-04-32669-A
Patent Literature 2
   JP-2005-299935-A
Patent Literature 3
   WO2011-108068

### Summary of the Invention

### Problem to be Solved by the Invention

However, according to the techniques disclosed in Patent Literature 1, the exhaust heat from the intermediate-temperature cycle can be used as a heat source for the high-temperature cycle only when the heat radiation amount of the intermediate-temperature cycle is larger than the heat absorption amount of the high-temperature cycle. In other words, only if the load of the intermediate-temperature cycle (air-conditioning load) is high, can the exhaust heat from the intermediate-temperature cycle be used as a heat source for the high-temperature cycle in carrying out the exhaust heat recovery operation.

For example, the air-conditioning load can be low typically during the air-conditioning operation (cooling) of a space of which the internal heat generation is low, such as the space of which the thermal insulation performance is high or the living space in which there are few residents, or during the air-conditioning operation (cooling) at night when outside air temperature is low. In such cases, if the load in the high-temperature cycle (hot water supply load) becomes larger than the air-conditioning load, the heat radiation amount of the intermediate-temperature cycle becomes greater than the heat absorption amount of the high-temperature cycle. This makes it difficult for the techniques disclosed in Patent Literature 1 to run the high-temperature cycle as demanded, disabling the exhaust heat recovery operation.

The air-conditioning equipment disclosed in Patent Literature 2 is configured so that a cascade condenser (intermediate heat exchanger) for recovering the exhaust heat from a main cycle (air-conditioning cycle) and an outdoor heat exchanger for the main cycle (heat exchanger on the side of the air-conditioning heat source) are arranged in parallel with each other, the cascade condenser and the outdoor heat exchanger being operated simultaneously to let the cascade condenser recover the exhaust heat from the main cycle. The exhaust heat thus recovered is transferred to a sub-cycle (hot water supply cycle) in carrying out the exhaust heat recovery operation.

When cooling operation is performed in the main cycle according to the techniques disclosed in Patent Literature 2, having the cascade condenser recover the exhaust heat from the main cycle for use as a heat source for the sub-cycle requires that the necessary quantity of heat be recovered by the cascade condenser from the exhaust heat from the main cycle having a large quantity of heat and that the excess quantity of heat be delivered from the outdoor heat exchanger for heat rejection (heat exchanger on the side of an air heat source). That is, the refrigerant containing heat and circulating in the main cycle needs to be distributed suitably between the cascade condenser and the outdoor heat exchanger (heat exchanger on the side of the air heat source).

However, Patent Literature 2 has no disclosure about techniques for suitably distributing the refrigerant between the cascade condenser and the outdoor heat exchanger in the main cycle.

The air-conditioning and hot water supply system disclosed in Patent Literature 3 is equipped with selector and expansion valves for switching from one operation to another such as cooling operation and cooling-heating-hot water supply operation.

For example, the air-conditioning and hot water supply system is operated intermittently in the middle of the night in summer when the demand load to the household air-conditioning cycle is low. Also, the middle of the night is the time when electricity rates are low, so that the hot water supply cycle may continue uninterrupted. That is, the operation of transferring the exhaust heat from the air-conditioning cycle to the hot water supply cycle and the operation of the hot water supply cycle may be carried out repeatedly.

Patent Literature 3 has no disclosure about control techniques for switching between two modes: a mode in which the operation of the air-conditioning cycle or the operation of the hot water supply cycle is performed individually in the refrigeration cycle, and a mode of the operation of the dual refrigeration cycle in which heat is transferred between the air-conditioning cycle and the hot water supply cycle. For example, in the case of a cycle involving a large exhaust heat amount such as one upon switchover from the operation mode of the single refrigeration cycle to the operation mode of the dual refrigeration cycle, the refrigerant may not be suitably distributed between the intermediate heat exchanger and the air heat source side heat exchanger arranged in parallel with the intermediate heat exchanger.

If the refrigerant is not distributed at a suitable flow rate to the intermediate heat exchanger, a heat source is not available in a cycle involving a small exhaust heat amount, so that the dual refrigeration cycle does not hold. It might also happen that heat exchange is not performed sufficiently with the refrigerant within the heat exchanger, causing a gaseous state or a two-phase state (gas-liquid mixed state) in the intermediate heat exchanger. If two streams of the refrigerant in such a state flow into each other upstream of the expansion valve, the refrigerant may expand in volume while flowing through the expansion valve to block the passage of the refrigerant.

It is therefore an object of the present invention to provide an exhaust heat recovery system capable of suitably circulating the refrigerant through the intermediate heat exchanger at the start of an exhaust heat recovery operation, and a method for operating the exhaust heat recovery system.

### Means for Solving the Problem

In achieving the above-mentioned object, the present invention provides an exhaust heat recovery system along with a method for operating the system including a first refrigerant circuit in which a first refrigerant circulates and a second refrigerant circuit in which a second refrigerant circulates, the first and the second refrigerant circuits being thermally connected with each other via an intermediate heat exchanger in which the first and the second refrigerants exchange heat therebetween. The first refrigerant circuit includes a first heat exchanger arranged in parallel with the intermediate heat exchanger with regard to the flow of the first refrigerant, the first heat exchanger permitting heat exchange between the first refrigerant and the atmosphere, and first limiting means which limits the inflow of the first refrigerant into the first heat exchanger. The second refrigerant circuit includes a second heat exchanger arranged in parallel with the intermediate heat exchanger with regard to the flow of the second refrigerant, the second heat exchanger permitting heat exchange between the second refrigerant and the atmosphere, and second limiting means which limits the inflow of the second refrigerant into the second heat exchanger. There is further provided a controller controlling an exhaust heat recovery operation in a manner allowing the intermediate heat exchanger to let the second refrigerant absorb the heat which was absorbed by the first refrigerant from an object to be cooled while circulating in the first refrigerant circuit and to let the second refrigerant release the heat to an object to be heated while circulating in the second refrigerant circuit. The controller controls the first limiting means to limit the inflow of the first refrigerant into the first heat exchanger and also controls the second limiting means to limit the inflow of the second refrigerant into the second heat exchanger at the start of the exhaust heat recovery operation.

### Effect of the Invention

The present invention thus provides an exhaust heat recovery system and a method for operating the system whereby refrigerants are allowed suitably to circulate in the intermediate heat exchanger at the start of an exhaust heat recovery operation.

### Brief Description of the Drawings

Fig. 1 is a configuration diagram of an air-conditioning and hot water supply system.
Fig. 2 is a tabular view showing status of the air-conditioning and hot water supply system in a first operating state, a second operating state, and a third operating state.
Fig. 3 is a diagram showing the air-conditioning and hot water supply system performing an exhaust heat recovery operation in the first operating state.
Fig. 4 is a diagram showing the air-conditioning and hot water supply system performing the exhaust heat recovery operation in the second operating state.
Fig. 5 is a diagram showing the air-conditioning and hot water supply system performing the exhaust heat recovery operation in the third operating state.
Fig. 6 is a flowchart showing the steps for starting the exhaust heat recovery operation.

### Mode for Carrying out the Invention

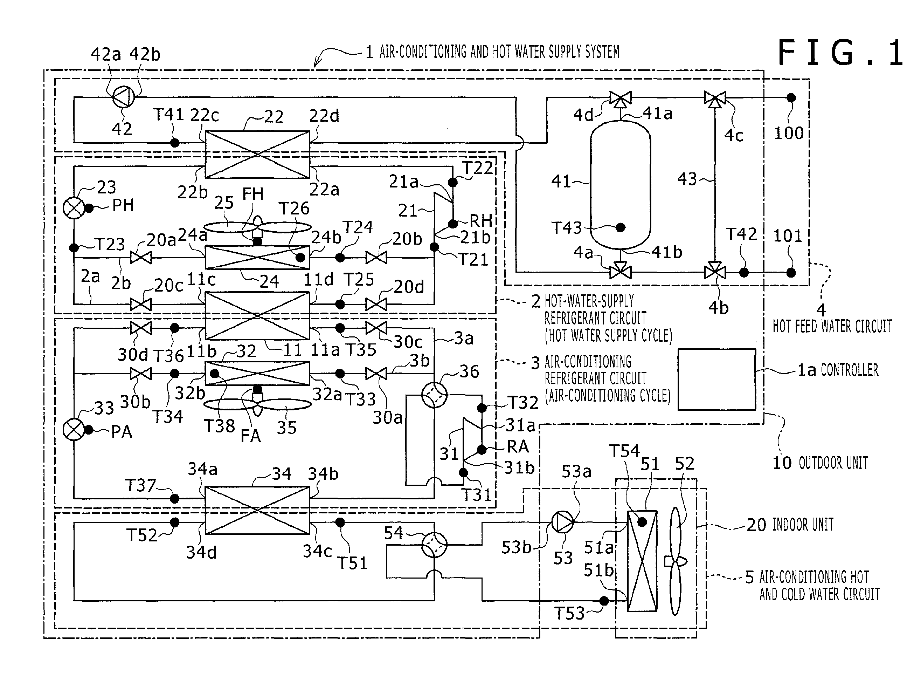

As shown in Fig. 1, an air-conditioning and hot water supply system 1 as one embodiment of the present invention is an exhaust heat recovery system configured to include an air-conditioning refrigerant circuit 3 (first refrigerant circuit) capable of switching between cooling operation and heating operation by operating an air-conditioning compressor 31 (first refrigerant compressor), and a hot-water-supply refrigerant circuit 2 (second refrigerant circuit) capable of performing hot water supply operation by operating a hot-water-supply compressor 21 (second refrigerant compressor). The air-conditioning and hot water supply system 1 also includes an air-conditioning hot and cold water circuit 5 that air-conditions the user's living space by releasing heat into the air-conditioning refrigerant circuit 3, and a hot feed water circuit 4 that supplies the user with hot water using as a heat source the absorbed heat from the hot-water-supply refrigerant circuit 2, the circuits 3 and 4 being controlled by a controller 1a.

The air-conditioning refrigerant circuit 3 and the hot-water-supply refrigerant circuit 2 are thermally connected with each other via an intermediate heat exchanger 11 for exhaust heat recovery operation in a manner constituting a dual cycle made up of an air-conditioning cycle and a hot water supply cycle.

In the ensuing description, cooling operation and heating operation will refer to those in the air-conditioning cycle involving the air-conditioning refrigerant circuit 3, and hot water supply operation will refer to that in the hot water supply cycle involving the hot-water-supply refrigerant circuit 2.

The air-conditioning and hot water supply system 1 is configured to include, for example, an outdoor unit 10 located outside the living space (outdoor) and an indoor unit 20 installed inside the living space (indoor).

The air-conditioning refrigerant circuit 3 is a circuit in which a first refrigerant (called the air-conditioning refrigerant hereunder) absorbing heat from the air-conditioning hot and cold water circuit 5 during cooling operation circulates to form the air-conditioning cycle. As such, the air-conditioning refrigerant circuit 3 includes the air-conditioning compressor 31 for compressing the air-conditioning refrigerant, a four-way valve 36 for switching passages of the air-conditioning refrigerant, the intermediate heat exchanger 11 in which the hot-water-supply refrigerant circulating in the hot-water-supply refrigerant circuit 2 and the air-conditioning refrigerant exchange heat with each other, an air-conditioning expansion valve 33 for decompressing the air-conditioning refrigerant, and an air-conditioning main circuit 3a with circularly connected refrigerant piping having a heat exchanger 34 on the air-conditioning use side in which a refrigerant (called the air-conditioning use side refrigerant hereunder) circulating in the air-conditioning hot and cold water circuit 5 exchanges heat with the air-conditioning refrigerant.

Further, an air-conditioning sub-circuit 3b is provided, equipped with a first heat exchanger (heat exchanger 32 on the air-conditioning heat source side) which is arranged in parallel with the intermediate heat exchanger 11 with regard to the flow of the air-conditioning refrigerant. The air-conditioning sub-circuit 3b is connected to the air-conditioning main circuit 3a. The heat exchanger 32 on the air-conditioning heat source side allows the air fed in by a first refrigerant circuit fan (air-conditioning outdoor fan 35) to exchange heat with the air-conditioning refrigerant, releasing the heat of the air-conditioning refrigerant into the atmosphere. The revolution speed of the air-conditioning outdoor fan 35 is measured with a revolution speed sensor FA.

The air-conditioning compressor 31 should preferably be of variable capacity type permitting capacity control. The compressors of this type include piston type, rotary type, scroll type, screw type, and centrifugal type compressors. In this embodiment, the air-conditioning compressor 31 is a scroll type compressor that may be controlled in capacity under inverter control, the revolution speed of the compressor being variable from low to high speeds.

In addition, the revolution speed of the air-conditioning compressor 31 is measured with a revolution speed sensor RA.

The heat exchanger 34 on the air-conditioning use side is configured with a plate type heat exchanger, or in such a manner that a refrigerant pipe (not shown) in which the air-conditioning refrigerant circulates is thermally in contact with a low-temperature water heat transfer pipe for air-conditioning (not shown) through which the water circulating in the air-conditioning hot and cold water circuit 5 or an antifreeze solution such as brine (air-conditioning use side refrigerant) passes.

The air-conditioning expansion valve 33 operates as a decompression device and has the capability to lower the pressure of the air-conditioning refrigerant to a predetermined pressure level by adjustment of valve opening. The valve opening of the air-conditioning expansion valve 33 is measured with a valve opening sensor PA.

The four-way valve 36 is interposed between the air-conditioning compressor 31 and the intermediate heat exchanger 11 as well as between the air-conditioning compressor 31 and the heat exchanger 34 on the air-conditioning use side. Also, the four-way valve 36 is configured to switch between two states: a state (first state) in which a delivery port 31a of the air-conditioning compressor 31 which delivers the compressed air-conditioning refrigerant is connected to the intermediate heat exchanger 11 and an inlet port 31b of the air-conditioning compressor 31 which sucks in the air-conditioning refrigerant is connected to the heat exchanger 34 on the air-conditioning use side; and a state (second state) in which the delivery port 31a of the air-conditioning compressor 31 is connected to the heat exchanger 34 on the air-conditioning use side and the inlet port 31b of the air-conditioning compressor 31 is connected to the intermediate heat exchanger 11. In Fig. 1, the four-way valve 36 indicates the first state with solid lines and the second state with dotted lines.

Also, the intermediate heat exchanger 11 has two connection ports with the air-conditioning refrigerant circuit 3 (first connection port 11a and second connection port 11b on the air-conditioning side). The heat exchanger 34 on the air-conditioning use side has two connection ports with the air-conditioning refrigerant circuit 3 (first connection port 34a and second connection port 34b on the air-conditioning side).

In the air-conditioning refrigerant circuit 3 structured as described above, when the four-way valve 36 is in the first state, the delivery port 31a of the air-conditioning compressor 31 is connected to the first connection port 11a on the air-conditioning side of the intermediate heat exchanger 11, and the second connection port 34b on the air-conditioning side of the heat exchanger 34 on the air-conditioning use side is connected via the four-way valve 36 to the inlet port 31b of the air-conditioning compressor 31.

When the four-way valve 36 is in the second state, the delivery port 31a of the air-conditioning compressor 31 is connected to the second connection port 34b on the air-conditioning side of the heat exchanger 34 on the air-conditioning use side, and the first connection port 11a on the air-conditioning side of the intermediate heat exchanger 11 is connected via the four-way valve 36 to the inlet port 31b of the air-conditioning compressor 31.

Furthermore, between the four-way valve 36 and the first connection port 11a on the air-conditioning side of the intermediate heat exchanger 11, the air-conditioning sub-circuit 3b branches from the air-conditioning main circuit 3a. The air-conditioning sub-circuit 3b joins the air-conditioning main circuit 3a between the second connection port 11b on the air-conditioning side of the intermediate heat exchanger 11 and the air-conditioning expansion valve 33. The air-conditioning sub-circuit 3b is equipped with the heat exchanger 32 on the air-conditioning heat source side.

The heat exchanger 32 on the air-conditioning heat source side has two connection ports (first connection port 32a and second connection port 32b). When the four-way valve 36 is in the first state, the first connection port 32a of the heat exchanger 32 on the air-conditioning heat source side is connected to the delivery port 31a of the air-conditioning compressor 31, and the second connection port 32b is connected via the air-conditioning expansion valve 33 to the first connection port 34a on the air-conditioning side of the heat exchanger 34 on the air-conditioning use side. On the other hand, when the four-way valve 36 is in the second state, the first connection port 32a of the heat exchanger 32 on the air-conditioning heat source side is connected to the inlet port 31b of the air-conditioning compressor 31.

As described above, when the four-way valve 36 is set to the first state, the air-conditioning refrigerant circuit 3 is configured with the four-way valve 36, intermediate heat exchanger 11, air-conditioning expansion valve 33, heat exchanger 34 on the air-conditioning use side, four-way valve 36, and air-conditioning compressor 31 (inlet port 31b) arranged in that order along the flow of the air-conditioning refrigerant coming from the delivery port 31a of the air-conditioning compressor 31. Also, the heat exchanger 32 on the air-conditioning heat source side is arranged in parallel with the intermediate heat exchanger 11 along the flow of the air-conditioning refrigerant.

When the four-way valve 36 is set to the second state, the air-conditioning refrigerant circuit 3 is configured with the four-way valve 36, heat exchanger 34 on the air-conditioning use side, air-conditioning expansion valve 33, intermediate heat exchanger 11, four-way valve 36, and air-conditioning compressor 31 (inlet port 31b) arranged in that order along the flow of the air-conditioning refrigerant coming from the delivery port 31a of the air-conditioning compressor 31.

The heat exchanger 32 on the air-conditioning heat source side is attached to the air-conditioning sub-circuit 3b and arranged in parallel with the intermediate heat exchanger 11 along the flow of the air-conditioning refrigerant. Air-conditioning refrigerant flow control valves 30a and 30b each adjusting the flow rate of the air-conditioning refrigerant are positioned on the side of the first and the second connection ports 32a and 32b, respectively, of the heat exchanger 32 on the air-conditioning heat source side. Air-conditioning refrigerant flow control valves 30c and 30d are further positioned on the side of the first and the second connection ports 11a and 11b on the air-conditioning side, respectively, of the intermediate heat exchanger 11.

The air-conditioning refrigerant flow control valves 30a through 30d may be an on-off valve each. The air-conditioning refrigerant flow control valve 30a positioned on the side of the first connection port 32a of the heat exchanger 32 on the air-conditioning heat source side may be a flow adjustment valve that can control the inflow of the air-conditioning refrigerant into the heat exchanger 32 on the air-conditioning heat source side.

Further, as shown in Fig. 1, there are provided a total of seven temperature sensors T31 through T37, attached to the delivery port 31a and inlet port 31b of the air-conditioning compressor 31, to the first and the second connection ports 32a and 32b of the heat exchanger 32 on the air-conditioning heat source side, to the first and the second connection ports 11a and 11b on the air-conditioning side of the intermediate heat exchanger 11, and to the first connection port 34a on the air-conditioning side of the heat exchanger 34 on the air-conditioning use side.

Also, the heat exchanger 32 on the air-conditioning heat source side is furnished with a temperature sensor T38 that measures the temperature of the air-conditioning refrigerant in the heat exchanger 32 on the air-conditioning heat source side.

The temperature sensor T38 is a temperature sensor that measures the temperature of the air-conditioning refrigerant close to the second connection port 32b of the heat exchanger 32 on the air-conditioning heat source side. The wording "close to" above refers to a location along the passage of the air-conditioning refrigerant inside the heat exchanger 32 on the air-conditioning heat source side, the location being past the midpoint and near the second connection port 32b. The temperature of the air-conditioning refrigerant measured with the temperature sensor T38 is considered a saturation temperature of the air-conditioning refrigerant (air-conditioning saturation temperature) in the heat exchanger 32 on the air-conditioning heat source side.

The saturation temperature of the air-conditioning refrigerant is a condensing temperature (air-conditioning condensing temperature) in effect when the air-conditioning cycle is in cooling operation, as well as an evaporating temperature (air-conditioning evaporating temperature) in effect when the air-conditioning cycle is in heating operation.

Incidentally, the air-conditioning refrigerant may be R410A, R134a, HFO1234vf, HFO1234ze, CO₂, or propane that may be used selectively depending on the use conditions in effect.

The air-conditioning hot and cold water circuit 5 is a circuit in which circulates the air-conditioning use side refrigerant such as water (heat transfer medium on the air-conditioning use side) that exchanges heat with the air-conditioning refrigerant circulating in the air-conditioning refrigerant circuit 3. As such, the air-conditioning hot and cold water circuit 5 is configured with an indoor heat exchanger 51, an air-conditioning hot and cold water circulating pump 53, a four-way valve 54, and the heat exchanger 34 on the air-conditioning use side, all connected by refrigerant piping.

The indoor heat exchanger 51 is a heat exchanger where the air-conditioning use side refrigerant and the air in the living space exchange heat with each other. The indoor unit 20 may be equipped with an indoor fan 52 for diffusing into the living space the air whose temperature has been lowered or raised through heat exchange with the air-conditioning use side refrigerant in the indoor heat exchanger 51.

The indoor heat exchanger 51 has a connection port (first connection port 51a) connected to a delivery port 53a of the air-conditioning hot and cold water circulating pump 53 for delivering the air-conditioning use side refrigerant flowing into the connection port 51a, and a connection port (second connection port 51b) through which the air-conditioning use side refrigerant flows out. The heat exchanger 34 on the air-conditioning use side has two connection ports with the air-conditioning hot and cold water circuit 5 (first connection port 34c and second connection port 34d on the use side).

The four-way valve 54 may be set to a first state or a second state, the first state being a state in which the first connection port 34c on the use side of the heat exchanger 34 on the air-conditioning use side is connected to the inlet port 53b of the air-conditioning hot and cold water circulating pump 53 and the second connection port 51b of the indoor heat exchanger 51 is connected to the second connection port 34d on the use side of the heat exchanger 34 on the air-conditioning use side, the second state being a state in which the second connection port 34d on the use side of the heat exchanger 34 on the air-conditioning use side is connected to the inlet port 53b of the air-conditioning hot and cold water circulating pump 53 and the second connection port 51b of the indoor heat exchanger 51 is connected to the first connection port 34c on the use side of the heat exchanger 34 on the air-conditioning use side. In Fig. 1, the four-way valve 54 indicates the first state with solid lines and the second state with dotted lines.

When the four-way valve 54 is set to the first state, the air-conditioning hot and cold water circuit 5 is configured with the indoor heat exchanger 51, four-way valve 54, heat exchanger 34 on the air-conditioning use side, four-way valve 54, and air-conditioning hot and cold water circulating pump 53 (inlet port 53b) arranged in that order along the flow of the air-conditioning use side refrigerant coming from the delivery port 53a of the air-conditioning hot and cold water circulating pump 53.

On the other hand, when the four-way valve 54 is set to the second state, the air-conditioning hot and cold water circuit 5 is configured with the indoor heat exchanger 51, four-way valve 54, heat exchanger 34 on the air-conditioning use side, four-way valve 54, and air-conditioning hot and cold water circulating pump 53 (inlet port 53b) arranged in that order along the flow of the air-conditioning use side refrigerant coming from the delivery port 53a of the air-conditioning hot and cold water circulating pump 53.

Temperature sensors T51 and T52 are attached to the first and the second connection ports 34c and 34d on the use side, respectively, of the heat exchanger 34 on the air-conditioning use side. A temperature sensor T53 is attached to the second connection port 51b of the indoor heat exchanger 51. There is also provided a temperature sensor T54 that measures the indoor temperature of the living space.

The air-conditioning use side refrigerant circulating in the air-conditioning hot and cold water circuit 5 is water (hot or cold water) that exchanges heat with the air of the living space in the indoor heat exchanger 51 for cooling or heating the living space. When the air-conditioning cycle is in cooling operation for cooling the living space, the air-conditioning use side refrigerant is cold water. The air-conditioning use side refrigerant absorbs heat of the living space and exchanges the absorbed heat with the air-conditioning refrigerant in the heat exchanger 34 on the air-conditioning use side for cooling purposes. That is, while the air-conditioning cycle is in cooling operation, the air-conditioning use side refrigerant is targeted for cooling by the air-conditioning refrigerant.

When the air-conditioning cycle is in heating operation for heating the living space, the air-conditioning use side refrigerant is hot water. In place of water as the air-conditioning use side refrigerant, brine (antifreeze solution) such as ethylene glycol may be utilized. Using brine as the air-conditioning use side refrigerant allows the air-conditioning and hot water supply system 1 to be employed in cold regions.

The hot-water-supply refrigerant circuit 2 is a circuit in which circulates a second refrigerant (hot-water-supply refrigerant) that releases heat into the hot feed water circuit 4, thereby constituting the hot water supply cycle (refrigeration cycle). As such, the hot-water-supply refrigerant circuit 2 includes the hot-water supply-compressor 21 for compressing the hot-water-supply refrigerant, intermediate heat exchanger 11, a hot-water-supply expansion valve 23 for decompressing the hot-water-supply refrigerant, and a hot-water-supply main circuit 2a with circularly connected refrigerant piping having a heat exchanger 22 on the hot-water-supply use side in which a heat transfer medium on the hot-water-supply use side (called the hot feed water hereunder) circulating in the hot feed water circuit 4 exchanges heat with the hot-water-supply refrigerant.

Furthermore, there is provided a hot-water-supply sub-circuit 2b equipped with a second heat exchanger (heat exchanger 24 on the hot-water-supply heat source side) which is arranged in parallel with the intermediate heat exchanger 11 with regard to the flow of the hot-water-supply refrigerant. The hot-water-supply sub-circuit 2b is connected to the hot-water-supply main circuit 2a. The heat exchanger 24 on the hot-water-supply heat source side allows the air fed in by a second refrigerant circuit fan (hot-water-supply outdoor fan 25) to exchange heat with the hot-water-supply refrigerant, causing the heat of the air to be absorbed into the hot-water-supply refrigerant. The revolution speed of the hot-water-supply outdoor fan 25 is measured with a revolution speed sensor FH.

The hot-water-supply compressor 21, as with the air-conditioning compressor 31, should preferably be of variable capacity type that may be controlled in capacity under inverter control and permits the revolution speed to vary from low to high speeds. For example, the hot-water-supply compressor 21 may be a scroll type compressor like the air-conditioning compressor 31. The revolution speed of the hot-water-supply compressor 21 is arranged to be measured with a revolution speed sensor RH.

The heat exchanger 22 on the hot-water-supply use side is configured with a plate type heat exchanger, or in such a manner that a refrigerant pipe (not shown) in which the hot-water-supply refrigerant circulates is thermally in contact with a hot-feed-water heat transfer pipe (not shown) through which the hot feed water circulating in the hot feed water circuit 4 passes.

The hot-water-supply expansion valve 23 has the capability to lower the pressure of the hot-water-supply refrigerant to a predetermined pressure level by adjustment of valve opening. The valve opening of the hot-water-supply expansion valve 23 is measured with a valve opening sensor PH.

The intermediate heat exchanger 11 has two connection ports with the hot-water-supply refrigerant circuit 2 (first connection port 11c and second connection port 11d on the hot water supply side). The heat exchanger 22 on the hot-water-supply use side has two connection ports with the hot-water-supply refrigerant circuit 2 (first connection port 22a and second connection port 22b on the hot water supply side).

In the hot-water-supply refrigerant circuit 2 structured as described above, a hot-water-supply refrigerant delivery port 21a of the hot-water-supply compressor 21 is connected with the first connection port 22a on the hot water supply side of the heat exchanger 22 on the hot-water-supply use side, and the second connection port 22b on the hot water supply side is connected with the first connection port 11c on the hot water supply side of the intermediate heat exchanger 11 via the hot-water-supply expansion valve 23. And the second connection port 11d on the hot water supply side of the intermediate heat exchanger 11 is connected with an inlet port 21b of the hot-water-supply compressor 21.

The hot-water-supply sub-circuit 2b branches between the hot-water-supply expansion valve 23 and the first connection port 11c on the hot water supply side of the intermediate heat exchanger 11. Between the second connection port 11d on the hot water supply side of the intermediate heat exchanger 11 and the inlet port 21b of the hot-water-supply compressor 21, the hot-water-supply sub-circuit 2b joins the hot-water-supply main circuit 2a. The hot-water-supply sub-circuit 2b is equipped with the heat exchanger 24 on the hot-water-supply heat source side having two connection ports (first connection port 24a and second connection port 24b).

As described above, the hot-water-supply refrigerant circuit 2 is configured with the heat exchanger 22 on the hot-water-supply use side, hot-water-supply expansion valve 23, intermediate heat exchanger 11, and hot-water-supply compressor 21 (inlet port 21b) arranged in that order along the flow of the hot-water-supply refrigerant coming from the delivery port 21a of the hot-water-supply compressor 21. Also, the heat exchanger 24 on the hot-water-supply heat source side is arranged in parallel with the intermediate heat exchanger 11 with regard to the flow of the hot-water-supply refrigerant. The first connection port 24a is connected to the first connection port 11c on the hot water supply side of the intermediate heat exchanger 11, and the second connection port 24b is connected to the inlet port 21b of the hot-water-supply compressor 21.

Hot-water-supply refrigerant flow control valves 20a and 20b are positioned on the side of the first and the second connection ports 24a and 24b, respectively, of the heat exchanger 24 on the hot-water-supply heat source side. Hot-water-supply refrigerant flow control valves 20c and 20d are positioned on the side of the first and the second connection ports 11c and 11d on the hot water supply side, respectively, of the intermediate heat exchanger 11.

The hot-water-supply refrigerant flow control valves 20a through 20d may be an on-off valve each. The hot-water-supply refrigerant flow control valve 20a positioned on the side of the first connection port 24a of the heat exchanger 24 on the hot-water-supply heat source side may be a flow adjustment valve that can control the inflow of the hot-water-supply refrigerant into the heat exchanger 24 on the hot-water-supply heat source side.

Further, as shown in Fig. 1, there are provided a total of five temperature sensors T21 through T25, four of which are attached to the delivery port 21a and inlet port 21b of the hot-water-supply compressor 21, to the second connection port 24b of the heat exchanger 24 on the hot-water-supply heat source side, and to the second connection port 11d on the hot water supply side of the intermediate heat exchanger 11, the other temperature sensor being positioned downstream of the hot-water-supply expansion valve 23.

The heat exchanger 24 on the hot-water-supply heat source side is also equipped with a temperature sensor T26 that measures the temperature of the hot-water-supply refrigerant in the heat exchanger 24 on the hot-water-supply heat source side.

The temperature sensor T26 is a temperature sensor that measures the temperature of the hot-water-supply refrigerant close to the second connection port 24b of the heat exchanger 24 on the hot-water-supply heat source side. The wording "close to" above refers to a location along the passage of the hot-water-supply refrigerant inside the heat exchanger 24 on the hot-water-supply heat source side, the location being past the midpoint and near the second connection port 24b. The temperature of the hot-water-supply refrigerant measured with the temperature sensor T26 is considered an evaporating temperature of the hot-water-supply refrigerant (hot-water-supply evaporating temperature) in the heat exchanger 24 on the hot-water-supply heat source side.

Incidentally, the hot-water-supply refrigerant may be R410A, R134a, HFO1234fy, HFO1234ze, CO₂, or propane that may be used selectively depending on the use conditions in effect.

The hot feed water circuit 4 is a circuit in which circulates water (hot feed water) that exchanges heat with the hot-water-supply refrigerant circulating in the hot-water-supply refrigerant circuit 2. As such, the hot feed water circuit 4 is configured with the heat exchanger 22 on the hot-water-supply use side, a hot water storage tank 41, and a hot feed water circulating pump 42 (inlet port 42b), arranged in that order along the flow of the hot feed water coming from a delivery port 42a of the hot feed water circulating pump 42.

The heat exchanger 22 on the hot-water-supply use side has two connection ports with the hot feed water circuit 4 (first connection port 22c and second connection port 22d on the use side). The hot feed water delivered from the delivery port 42a of the hot feed water circulating pump 42 flows into the heat exchanger 22 on the hot-water-supply use side through the connection port 22c on the use side. In the heat exchanger 22 on the hot-water-supply use side, the hot feed water is allowed to exchange heat with the hot-water-supply refrigerant circulating in the hot-water-supply refrigerant circuit 2 and is heated thereby. The hot feed water then flows out of the second connection port 22d on the use side and is stored into the hot water storage tank 41. That is, in this embodiment, the hot feed water is targeted for heating by the heat released from the hot-water-supply refrigerant.

The hot feed water heated in the heat exchanger 22 on the hot-water-supply use side is led into the hot water storage tank 41 for storage through an intake 41a formed at the top of the hot water storage tank 41. The hot feed water stored in the hot water storage tank 41 is taken out through an outlet 41b formed at the bottom of the hot water storage tank 41 and sucked into the hot feed water circulating pump 42 through the inlet port 42b, the water thus being circulated in the hot feed water circuit 4.

The intake 41a is also equipped with a feed end 100 such as a water outlet (faucet). The hot feed water stored in the hot water storage tank 41 may be supplied to the user through the feed end 100.

Further, a feed-water inlet 101 is coupled to the outlet 41b of the hot water storage tank 41, so that low-temperature hot feed water such as tap water can be taken through the outlet 41b into the hot water storage tank 41. This structure allows the amount of hot feed water stored in the hot water storage tank 41 to be maintained at a suitable level (e.g., full to the brim).

Also, the feed-water inlet 101 and the feed end 100 are directly connected with each other via a water-adding passage 43, so that the hot feed water retrieved from the intake 41a of the hot water storage tank 41 may be mixed with the hot feed water flowing in through the feed-water inlet 101. This structure allows the user to be supplied with the hot feed water at a desired water temperature through the feed end 100.

A three-way valve 4a is provided to connect a passage that couples the outlet 41b of the hot water storage tank 41 with the hot feed water circulating pump 42, a passage that couples the feed-water inlet 101 with the outlet 41b of the hot water storage tank 41, and the outlet 41b of the hot water storage tank 41. The three-way valve 4a adjusts the feed of hot feed water from the hot water storage tank 41 to the hot feed water circulating pump 42 and the feed of hot feed water from the feed-water inlet 101 to the hot water storage tank 41.

Specifically, when the three-way valve 4a is in the state to connect the outlet 41b of the hot water storage tank 41 with the inlet port 42b of the hot feed water circulating pump 42 (called the first state hereunder), the hot feed water stored in the hot water storage tank 41 is sucked into the hot feed water circulating pump 41 through the inlet port 42b. When the three-way valve 4a is in the state to connect the outlet 41b of the hot water storage tank 41 with the feed-water inlet 101 (called the second state hereunder), the hot feed water flowing into the feed-water inlet 101 is led from the outlet 41b into the hot water storage tank 41 under water pressure at the feed-water inlet 101.

Also, a three-way valve 4d is provided to connect a passage that couples the intake 41a of the hot water storage tank 41 with the heat exchanger 22 on the hot-water-supply use side, a passage that couples the feed end 100 with the intake 41a of the hot water storage tank 41, and the intake 41a of the hot water storage tank 41. The three-way valve 4d adjusts the feed of hot feed water from the hot water storage tank 41 to the feed end 100 and the feed of hot feed water from the heat exchanger 22 on the hot-water-supply use side to the hot water storage tank 41.

Specifically, when the three-way valve 4d is in the state to connect the intake 41a of the hot water storage tank 41 with the second connection port 22d on the use side of the heat exchanger 22 on the hot-water-supply use side (called the first state hereunder), the hot feed water heated in the heat exchanger 22 on the hot-water-supply use side is stored into the hot water storage tank 41. When the three-way valve 4d is in the state to connect the intake 41a of the hot water storage tank 41 with the feed end 100 (called the second state hereunder), the hot feed water stored in the hot water storage tank 41 can be supplied to the user.

Furthermore, the water-adding passage 43 is connected to the passage that couples the feed-water inlet 101 with the outlet 41b of the hot water storage tank 41 via a three-way valve 4b, and to the passage that couples the feed end 100 with the intake 41a of the hot water storage tank 41 via a three-way valve 4c. When the three-way valve 4b is set to the state that connects the feed-water inlet 101 with the water-adding passage 43 (called the first state hereunder) and when the three-way valve 4c is set to the state that connects the water-adding passage 43 with the feed end 100 (called the first state hereunder), the hot feed water flowing into the feed-water inlet 101 is mixed with the hot feed water retrieved from the hot water storage tank 41 and supplied to the user through the feed end 100.

The three-way valves 4b and 4c in the first state should preferably be structured to permit, through adjustment of their valve openings, control of the flow rate of the hot feed water in the water-adding passage 43. This structure makes it possible to suitably set the temperature of the hot feed water supplied from the feed end 100 to the user. That is, the higher the flow rate of the hot feed water becomes in the water-adding passage 43, the lower the temperature of the hot feed water supplied from the feed end 100 to the user becomes.

The hot feed water circuit 4 has temperature sensors T41 and T42 installed near the feed-water inlet 101 and the first connection port 22c on the use side of the heat exchanger 22 on the hot-water-supply use side. There is also provided a temperature sensor T43 that measures the temperature of the hot feed water stored in the hot water storage tank 41 (the temperature of the stored hot feed water).

The air-conditioning and hot water supply system 1 configured as described above is controlled by the controller 1a. The controller 1a is configured to admit measurements from the sensors as signals (measurement signals). The controller 1a controls the air-conditioning and hot water supply system 1 on the basis of these measurement signals. In this context, the sensors include the temperature sensors T21 through T26, the revolution speed sensors FH and RH, and the valve opening sensor PH installed in the hot-water-supply refrigerant circuit 2, the temperature sensors T31 through T38, the revolution speed sensors FA and RA, and the valve opening sensor PA installed in the air-conditioning refrigerant circuit 3, the temperature sensors T41 through T43 installed in the hot feed water circuit 4, and the temperature sensors T51 through T53 installed in the air-conditioning hot and cold water circuit 5.

Further, demands from the user are input to the controller 1a as operation command signals from a remote controller (not shown), for example.

On the basis of the demands input from the user and the measurement signals from the sensors, the controller 1a controls the air-conditioning and hot water supply system 1 in a manner covering the start and stop of the air-conditioning compressor 31 and hot-water-supply compressor 21, switching of the four-way valves 36 and 54, opening adjustments of the air-conditioning expansion valve 33 and hot-water-supply expansion valve 23, opening settings of the air-conditioning refrigerant flow control valves 30a through 30d and hot-water-supply refrigerant flow control valves 20a through 20d, and the start and stop of the air-conditioning hot and cold water circulating pump 53 and hot feed water circulating pump 42.

For example, if the user demands cooling of the living space, the controller 1a controls the air-conditioning and hot water supply system 1 to activate the air-conditioning cycle for cooling operation. Specifically, the controller 1a sets the four-way valve 36 of the air-conditioning refrigerant circuit 3 to the first state and the four-way valve 54 of the air-conditioning hot and cold water circuit 5 to the second state. The controller 1a then operates the air-conditioning compressor 31 and air-conditioning hot and cold water circulating pump 53. The controller 1a further controls (opens) the air-conditioning refrigerant flow control valves 30a and 30b and operates the air-conditioning outdoor fan 35.

Also, the controller 1a heats (boils) the hot feed water stored in the hot water storage tank 41 by carrying out hot water supply operation in the hot water supply cycle as needed. Specifically, the controller 1a sets the three-way valve 4a to the first state and the three-way valve 4d also to the first state. The controller 1a then operates the hot-water-supply compressor 21 and hot feed water circulating pump 42. The controller 1a further opens the hot-water-supply refrigerant flow control valves 20a and 20b and operates the hot-water-supply outdoor fan 25.

The controller 1a performs hot water supply operation in the hot water supply cycle when a predetermined time of day is reached or when the temperature of the hot feed water stored in the hot water storage tank 41 drops below a predetermined temperature.

In carrying out the cooling operation in the air-conditioning cycle and the hot water supply operation in the hot water supply cycle at the same time, the air-conditioning and hot water supply system 1 of this embodiment can perform "exhaust heat recovery operation," i.e., hot water supply operation in the hot water supply cycle in which the air-conditioning refrigerant circulating in the air-conditioning refrigerant circuit 3 exchanges heat with the hot-water-supply refrigerant circulating in the hot-water-supply refrigerant circuit 2 inside the intermediate heat exchanger 11.

Whenever the user demands cooling operation and hot water supply operation simultaneously, the air-conditioning and hot water supply system 1 of this embodiment can perform the exhaust heat recovery operation. The controller 1a selects the heat exchangers and refrigerant passages to be used depending on the amount of heat which is generated in the cooling operation of the air-conditioning refrigerant circuit 3 and can be released by the air-conditioning refrigerant (called "the air-conditioning heat radiation amount" hereunder) in comparison with the amount of heat which is needed in the hot water supply operation of the hot-water-supply refrigerant circuit 2 and can be absorbed by the hot-water-supply refrigerant (called "the hot water supply heat absorption amount" hereunder).

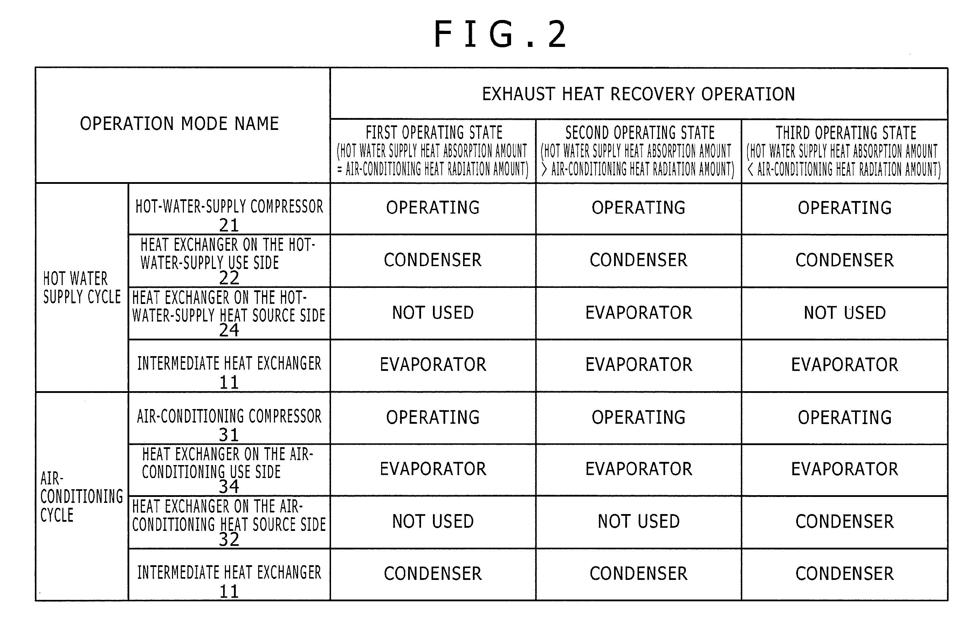

Fig. 2 shows the status (operating states) in effect when the air-conditioning and hot water supply system 1 performs the exhaust heat recovery operation. For example, the air-conditioning heat radiation amount in effect when the air-conditioning cycle is in cooling operation is determined by the room temperature of the living space and by the temperature set by the user (set temperature at the time of cooling operation). The hot water supply heat absorption amount in effect when the hot water supply cycle is in hot water supply operation is determined by the temperature of the hot feed water stored in the hot water storage tank 41 (see Fig. 1) and by a target water temperature for the hot water supply cycle (boiling temperature). In this embodiment, the controller 1a (see Fig. 1) sets one of three operating states for the air-conditioning and hot water supply system 1 (see Fig. 1) depending on the air-conditioning heat radiation amount in comparison with the hot water supply heat absorption amount. That is, the three operating states to be set are made up of: an operating state (first operating state) in which the hot water supply heat absorption amount is equal to the air-conditioning heat radiation amount (hot water supply heat absorption amount = air-conditioning heat radiation amount); an operating state (second operating state) in which the hot water supply heat absorption amount is larger than the air-conditioning heat radiation amount (hot water supply heat absorption amount > air-conditioning heat radiation amount); and an operating state (third operating state) in which the hot water supply heat absorption amount is smaller than the air-conditioning heat radiation amount (hot water supply heat absorption amount < air-conditioning heat radiation amount).

The first through the third operating states are explained below with reference to Figs. 2 through 5.

The air-conditioning and hot water supply system 1 of this embodiment is configured to perform the exhaust heat recovery operation when carrying out the cooling operation in the air-conditioning cycle and the hot water supply operation in the hot water supply cycle simultaneously.

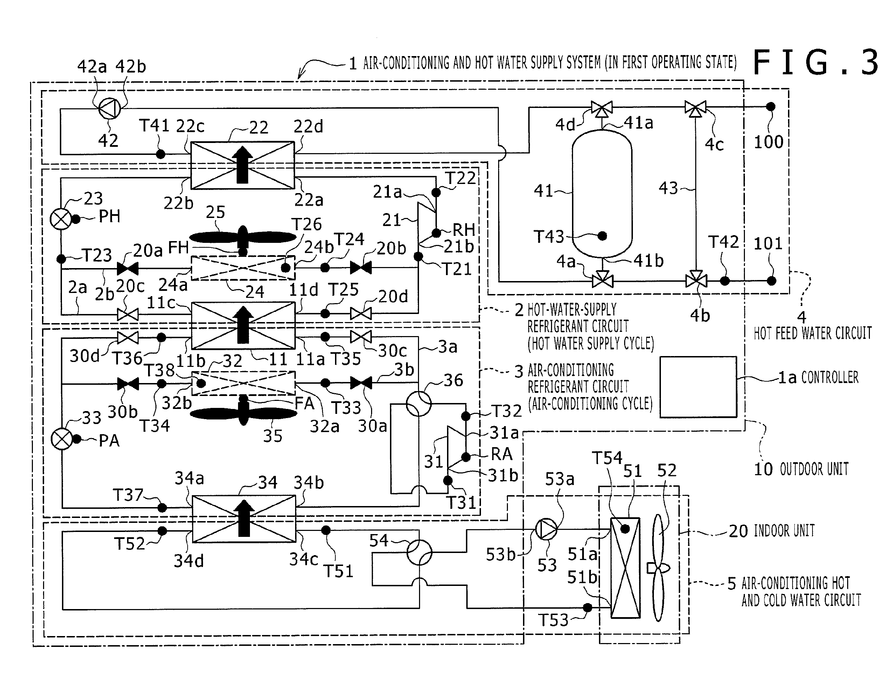

Incidentally, in Figs. 3 through 5, the heat exchangers shown with solid lines (heat exchanger 22 on the hot-water-supply use side, heat exchanger 24 on the hot-water-supply heat source side, intermediate heat exchanger 11, heat exchanger 32 on the air-conditioning heat source side, and heat exchanger 34 on the air-conditioning use side) indicate the state in which heat exchange takes place. In this case, solid black arrows point to the directions of heat transfer. The heat exchangers shown with dotted lines indicate the state in which heat exchange does not occur.

Further, the air-conditioning refrigerant flow control valves 30a through 30d and the hot-water-supply refrigerant flow control valves 20a through 20d are in an opened state when shown blank and in a closed state when shown solid black in the figures. Also, the air-conditioning outdoor fan 35 and the hot-water-supply outdoor fan 25 are in operation when shown blank and at rest when shown solid black in the figures.

### «First operating state»

When the air-conditioning heat radiation amount is equal to the hot water supply heat absorption amount, the controller 1a sets the air-conditioning and hot water supply system 1 to the first operating state, allowing the system 1 to perform the exhaust heat recovery operation by carrying out cooling operation in the air-conditioning cycle and hot water supply operation in the hot water supply cycle.

In the first operating state, as shown in Fig. 2, the heat exchanger 24 on the hot-water-supply heat source side in the hot-water-supply refrigerant circuit 2 (hot water supply cycle) is not used. The heat exchanger 22 on the hot-water-supply use side is used as a condenser and the intermediate heat exchanger 11 as an evaporator. The heat exchanger 32 on the air-conditioning heat source side in the air-conditioning refrigerant circuit 3 (air-conditioning cycle) is not used. The heat exchanger 34 on the air-conditioning use side is used as an evaporator and the intermediate heat exchanger 11 as a condenser. Further, the air-conditioning compressor 31 and hot-water-supply compressor 21 are operated.

Specifically, as shown in Fig. 3, the controller 1a sets the four-way valve 36 to the first state and the four-way valve 54 to the second state. Also, the controller 1a opens the air-conditioning refrigerant flow control valves 30c and 30d and the hot-water-supply refrigerant flow control valves 20c and 20d, and closes the air-conditioning refrigerant flow control valves 30a and 30b and the hot-water-supply refrigerant flow control valves 20a and 20b. The controller 1a then stops the air-conditioning outdoor fan 35 and hot-water-supply outdoor fan 25.

Furthermore, the controller 1a sets the three-way valve 4a to the first state and the three-way valve 4d also to the first state. The controller 1a then operates the hot feed water circulating pump 42.

When the air-conditioning refrigerant flow control valve 30a (30b) is closed, the inflow of the air-conditioning refrigerant into the heat exchanger 32 on the air-conditioning heat source side is blocked. Thus the air-conditioning refrigerant flow control valve 30a (30b) functions as refrigerant inflow limiting means (first limiting means) that limits the inflow of the air-conditioning refrigerant into the heat exchanger 32 on the air-conditioning heat source side.

Likewise, when the hot-water-supply refrigerant flow control valve 20a (20b) is closed, the inflow of the hot-water-supply refrigerant into the heat exchanger 24 on the hot-water-supply heat source side is blocked. The hot-water-supply refrigerant flow control valve 20a (20b) thus functions as refrigerant inflow limiting means (second limiting means) that limits the inflow of the hot-water-supply refrigerant into the heat exchanger 24 on the hot-water-supply heat source side.

In the air-conditioning refrigerant circuit 3, the air-conditioning refrigerant is compressed with the air-conditioning compressor 31 into a high-temperature gaseous refrigerant (the gaseous state will be indicated with (G), the liquid state with (L), and the gas-liquid two-phase state with (B) hereunder as needed) which flows into the intermediate heat exchanger 11 via the four-way valve 36. In the intermediate heat exchanger 11, the air-conditioning refrigerant (G) releases its heat to the low-temperature hot-water-supply refrigerant (B) to condense and liquefy. The liquefied air-conditioning refrigerant (L) at high pressure flows into the air-conditioning expansion vale 33 to decompress and expand. The air-conditioning refrigerant thus reaches a low-temperature, low-pressure two-phase state (gas-liquid mixed state) before flowing into the heat exchanger 34 on the air-conditioning use side.

The air-conditioning refrigerant (B) flowing into the heat exchanger 34 on the air-conditioning use side absorbs heat from the relatively high-temperature air-conditioning use side refrigerant (L) circulating in the air-conditioning hot and cold water circuit 5, thereby evaporating and gasifying to become a low-pressure air-conditioning refrigerant (G). The low-pressure air-conditioning refrigerant (G) is then compressed with the air-conditioning compressor 31.

In the air-conditioning hot and cold water circuit 5, the air-conditioning use side refrigerant (L) that has released its heat to the air-conditioning refrigerant (B) passing through the heat exchanger 34 on the air-conditioning use side is caused by the air-conditioning hot and cold water circulating pump 53 to flow into the indoor heat exchanger 51. In the indoor heat exchanger 51, the air-conditioning use side refrigerant (L) inside the air-conditioning hot and cold water circuit 5 absorbs heat from the high-temperature air in the living space to cool the hot air in the living space. That is, the living space is cooled.

The air-conditioning use side refrigerant (L) heated by absorption of heat in the indoor heat exchanger 51 is caused by the air-conditioning hot and cold water circulating pump 53 to again flow into the heat exchanger 34 on the air-conditioning use side, and releases the heat into the air-conditioning refrigerant (B). When the air-conditioning and hot water supply system 1 performs cooling operation, the air-conditioning use side refrigerant (L) circulates in the air-conditioning hot and cold water circuit 5 as described above to cool the living space.

In the hot-water-supply refrigerant circuit 2, the hot-water-supply refrigerant compressed with the hot-water-supply compressor 21 into a high-temperature, high-pressure refrigerant (G) flows into the heat exchanger 22 on the hot-water-supply use side. In the heat exchanger 22 on the hot-water-supply use side, the hot-water-supply refrigerant (G) releases its heat to the hot feed water circulating in the hot feed water circuit 4 and is thereby condensed and liquefied. The liquefied hot-water-supply refrigerant (L) expands and decompresses in the hot-water-supply expansion valve 23 that is opened at a predetermined angle under high pressure, thus reaching a low-temperature, low-pressure two-phase state. The hot-water-supply refrigerant (B) in the two-phase state absorbs heat from the air-conditioning refrigerant (G) in the intermediate heat exchanger 11, evaporates and becomes a low-pressure hot-water-supply refrigerant (G). This refrigerant (G) is sucked into the hot-water-supply compressor 21 for compression before flowing into the heat exchanger 22 on the hot-water-supply use side.

In the hot feed water circuit 4, the hot feed water stored in the hot water storage tank 41 is caused by the hot feed water circulating pump 42 to flow into the heat exchanger 22 on the hot-water-supply use side. In the heat exchanger 22, the water absorbs heat from the high-temperature hot-water-supply refrigerant (G) and is heated. Thus heated, the high-temperature hot feed water is stored for the moment in the hot water storage tank 41 and is supplied to the user on his or her demand through the feed end 100 (e.g., faucet). Meanwhile, the controller 1a controls appropriately the three-way valves 4a through 4d installed in the hot feed water circuit 4 to boil the water or supply the hot water to the user.

In this case, the hot feed water retrieved from the hot water storage tank 41 is mixed as needed with the hot feed water passing through the water-adding passage 43. The user is thus supplied through the feed end 100 with the hot feed water at the temperature demanded by the user.

As described above, when the air-conditioning and hot water supply system 1 is set to the first operating state to perform the exhaust heat recovery operation by carrying out cooling operation as an air-conditioning system and conducting hot water supply operation as a hot water supply system, the air-conditioning refrigerant circulating in the air-conditioning refrigerant circuit 3 and the hot-water-supply refrigerant circulating in the hot-water-supply refrigerant circuit 2 all flow into the intermediate heat exchanger 11 where the hot-water-supply refrigerant absorbs heat from the air-conditioning refrigerant.

In the intermediate heat exchanger 11, the entire air-conditioning heat radiation amount is absorbed as the hot water supply heat absorption amount into the hot-water-supply refrigerant.

With the above-described structure, when the air-conditioning heat radiation amount is equal to the hot water supply heat absorption amount, the quantity of heat recovered from the living space can be used as a heat source for the hot feed water.

### «Second operating state»

When the air-conditioning heat radiation amount is less than the hot water supply heat absorption amount, the controller 1a sets operational status to the second operating state in which cooling operation is performed in the air-conditioning cycle and hot water supply operation is conducted in the hot water supply cycle in carrying out the exhaust heat recovery operation.

In the second operating state, as shown in Fig. 2, the heat exchanger 22 on the hot-water-supply use side in the hot-water-supply refrigerant circuit 2 (hot water supply cycle) is used as a condenser, and the heat exchanger 24 on the hot-water-supply heat source side and the intermediate heat exchanger 11 are used as evaporators. The heat exchanger 32 on the air-conditioning heat source side in the air-conditioning refrigerant circuit 3 (air-conditioning cycle) is not used. The heat exchanger 34 on the air-conditioning use side is used as an evaporator and the intermediate heat exchanger 11 as a condenser. Further, the air-conditioning compressor 31 and hot-water-supply compressor 21 are operated.

In the second operating state, the controller 1a should preferably control the air-conditioning and hot water supply system 1 in a manner suitably distributing the hot-water-supply refrigerant circulating in the hot-water-supply refrigerant circuit 2 between the intermediate heat exchanger 11 and the heat exchanger 24 on the hot-water-supply heat source side, so that the heat absorption amount of the hot-water-supply refrigerant in the intermediate heat exchanger 11 becomes equal to the air-conditioning heat radiation amount.

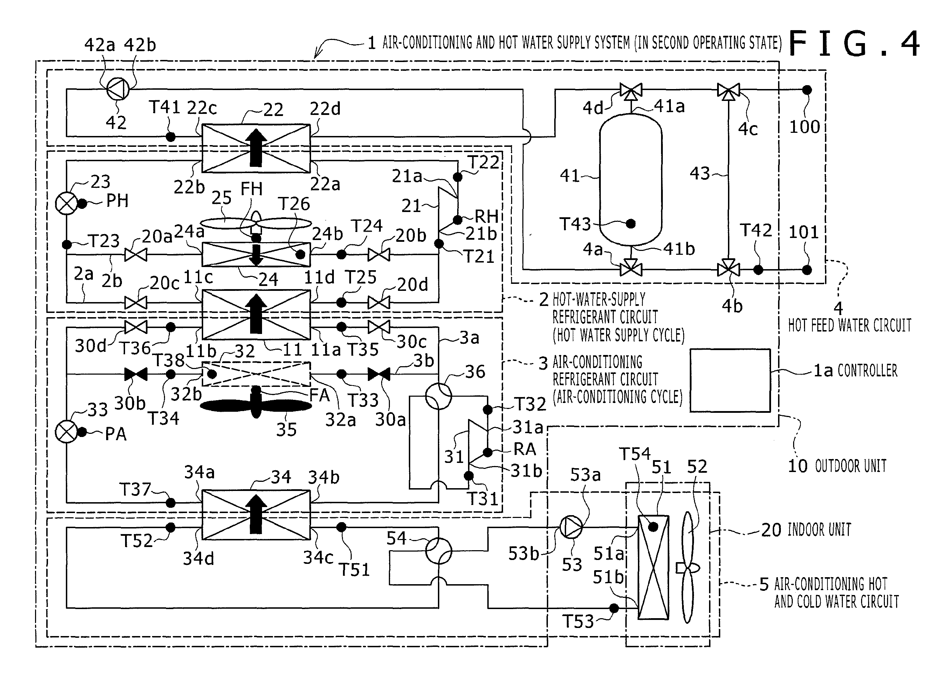

Specifically, as shown in Fig. 4, the controller 1a sets the four-way valve 36 to the first state and the four-way valve 54 to the second state. Also, the controller 1a opens the air-conditioning refrigerant flow control valves 30c and 30d and the hot-water-supply refrigerant flow control valves 20a through 20d, and closes the air-conditioning refrigerant flow control valves 30a and 30b. The controller 1a further operates the hot-water-supply outdoor fan 25 and stops the air-conditioning outdoor fan 35.

The controller 1a further sets the three-way valve 4a to the first state and the three-way valve 4d also to the first state. And the controller 1a operates the hot feed water circulating pump 42.

In this case, if the intermediate heat exchanger 11 and the heat exchanger 24 on the hot-water-supply heat source side arranged in parallel with each other are both operated as evaporators of the hot-water-supply refrigerant, there occurs the problem of being unable to distribute the hot-water-supply refrigerant suitably between the intermediate heat exchanger 11 and the heat exchanger 24 on the hot-water-supply heat source side. That is because the target with which the hot-water-supply refrigerant exchanges heat is the air-conditioning refrigerant in the intermediate heat exchanger 11 and the atmosphere in the heat exchanger 24 on the hot-water-supply heat source side. That is, the target that permits heat exchange with the hot-water-supply refrigerant differs between the intermediate heat exchanger 11 and the heat exchanger 24 on the hot-water-supply heat source side.

For example, suppose that while performing hot water supply operation individually in the hot water supply cycle, the air-conditioning and hot water supply system 1 is set to the second operating state to start cooling operation in the air-conditioning cycle. In this case, the air-conditioning refrigerant is not ready to release its heat immediately after the cooling operation is started, so that the hot-water-supply refrigerant passing through the intermediate heat exchanger 11 cannot absorb sufficient heat. In the intermediate heat exchanger 11, the thermal resistance of the passage for the hot-water-supply refrigerant is raised, which reduces the amount of the hot-water-supply refrigerant passing through the heat exchanger 11. Thus the hot-water-supply refrigerant is distributed in such a manner that the amount of the hot-water-supply refrigerant flowing into the intermediate heat exchanger 11 drops while the inflow of the hot-water-supply refrigerant into the heat exchanger 24 on the hot-water-supply heat source side increases.

Where the hot-water-supply refrigerant is not appropriately distributed as in the above case, the hot-water-supply refrigerant passing through the intermediate heat exchanger 11 can hardly absorb heat. In its liquid form, the hot-water-supply refrigerant (L) flows out of the intermediate heat exchanger 11 and joins the hot-water-supply refrigerant (G) vaporized in the heat exchanger 24 on the hot-water-supply heat source side. The mixture of the gaseous hot-water-supply refrigerant (G) with the liquefied hot-water-supply refrigerant (L) increases the volume of the hot-water-supply refrigerant. This places the hot-water-supply refrigerant circuit 2 in an unstable state in which a blocked passage is liable to occur.

Under these circumstances, the controller 1a of this embodiment is arranged not to place the hot-water-supply refrigerant circuit 2 in the unstable state and to set the air-conditioning and hot water supply system 1 to the second operating state thereby causing the system 1 to start the exhaust heat recovery operation.

Specifically, at the start of the exhaust heat recovery operation, the controller 1a controls (closes) the air-conditioning refrigerant flow control valves 30a and 30b to limit the inflow of the air-conditioning refrigerant into the heat exchanger 32 on the air-conditioning heat source side, stops the air-conditioning outdoor fan 35, controls (closes) the hot-water-supply refrigerant flow control valves 20a and 20b to limit the inflow of the hot-water-supply refrigerant into the heat exchanger 24 on the hot-water-supply heat source side, and stops the hot-water-supply outdoor fan 25. The controller 1a then opens the air-conditioning refrigerant flow control valves 30c and 30d and the hot-water-supply refrigerant flow control valves 20c and 20d and starts cooling operation in the air-conditioning cycle and hot water supply operation in the hot water supply cycle.

In the above state, the controller 1a adjusts the revolution speeds of the air-conditioning compressor 31 and hot-water-supply compressor 21, and also adjusts the openings of the air-conditioning expansion valve 33 and hot-water-supply expansion valve 23. As mentioned above, the openings of the air-conditioning expansion valve 33 and hot-water-supply expansion valve 23 are adjusted in accordance with the target temperature set by the user for the living space (set temperature for cooling operation), the boiling temperature of the hot feed water, and the like.

The controller 1a monitors the temperature of the air-conditioning refrigerant in the intermediate heat exchanger 11 (temperature of the air-conditioning refrigerant at the second connection port 11b on the air-conditioning side) by use of measurement signals input from the temperature sensor T36. When the temperature of the air-conditioning refrigerant reaches a predetermined target value, the controller 1a starts to operate the hot-water-supply outdoor fan 25, before controlling (opening) the hot-water-supply refrigerant flow control valves 20a and 20b to cancel the limitation on the inflow of the hot-water-supply refrigerant into the heat exchanger 24 on the hot-water-supply heat source side.

In this case, the controller 1a should preferably be arranged to first operate the hot-water-supply outdoor fan 25 and then to open the hot-water-supply refrigerant flow control valves 20a and 20b. This structure permits heat exchange between the hot-water-supply refrigerant and the atmosphere immediately after the hot-water-supply refrigerant has started to pass through the heat exchanger 24 on the hot-water-supply heat source side. In this manner, the controller 1a can stabilize hot water supply operation in the hot water supply cycle.

The target temperature of the air-conditioning refrigerant in effect when the controller 1a opens the hot-water-supply refrigerant flow control valve 20a may be the temperature determined beforehand in experiments or the like on the basis of the target room temperature set by the user (set temperature for cooling operation), a target air flow rate, the room temperature of the living space and the like. For example, the controller 1a may be arranged to set the target temperature value on the basis of the target room temperature, the target air flow rate, and the room temperature of the living space with reference to a chart showing the relations involving the target room temperature, the target air flow rate, the room temperature of the living space, and the target temperature of the air-conditioning refrigerant.

When the air-conditioning and hot water supply system 1 is set to the second operating state in the above-described steps and starts performing the exhaust heat recovery operation, a high-temperature, high-pressure air-conditioning refrigerant (G) delivered from the air-conditioning compressor 31 flows via the four-way valve 36 into the intermediate heat exchanger 11 in the air-conditioning refrigerant circuit 3. The air-conditioning refrigerant (G) flowing into the intermediate heat exchanger 11 releases its heat to the low-temperature hot-water-supply refrigerant (B) to condense and liquefy. The air-conditioning refrigerant (L) liquefied in the intermediate heat exchanger 11 flows at high pressure into the air-conditioning expansion valve 33 with a predetermined opening for decompression and expansion. The refrigerant thus turns into a low-temperature, low-pressure, two-phase-state air-conditioning refrigerant (B) before flowing into the heat exchanger 34 on the air-conditioning use side.

The air-conditioning refrigerant (B) flowing into the heat exchanger 34 on the air-conditioning use side absorbs heat from the relatively high-temperature air-conditioning use side refrigerant (L) circulating inside the air-conditioning hot and cold water circuit 5 and is evaporated and gasified thereby. The refrigerant turns into a low-pressure air-conditioning refrigerant (G). The refrigerant (G) is then compressed with the air-conditioning compressor 31.

In the hot-water-supply refrigerant circuit 2, the hot-water-supply refrigerant compressed with the hot-water-supply compressor 31 into a high-temperature, high-pressure hot-water-supply refrigerant (G) flows into the heat exchanger 22 on the hot-water-supply use side. In the heat exchanger 22 on the hot-water-supply use side, the hot-water-supply refrigerant (G) releases its heat to the hot feed water circulating in the hot feed water circuit 4 to condense and liquefy. The liquefied hot-water-supply refrigerant (L) expands and decompresses in the hot-water-supply expansion valve 23 with a predetermined opening at high pressure, becoming a low-temperature, low-pressure, two-phase-state hot-water-supply refrigerant (B). This hot-water-supply refrigerant (B) flows into the intermediate heat exchanger 11 and the heat exchanger 24 on the hot-water-supply heat source side. The hot-water-supply refrigerant (B) flowing into the intermediate heat exchanger 11 absorbs heat from the high-temperature air-conditioning refrigerant (G) and is evaporated and gasified thereby to become a low-pressure hot-water-supply refrigerant (G). Meanwhile, the hot-water-supply refrigerant (B) flowing into the heat exchanger 24 on the hot-water-supply heat source side absorbs heat from the relatively high-temperature atmosphere to evaporate and becomes a low-pressure hot-water-supply refrigerant (G). The hot-water-supply refrigerant (G) gasified in the intermediate heat exchanger 11 and heat exchanger 24 on the hot-water-supply heat source side joins each other before being sucked into the hot-water-supply compressor 21 for compression.

Incidentally, the passage of the hot feed water through the hot feed water circuit 4 and the circulation of the air-conditioning use side refrigerant in the air-conditioning hot and cold water circuit 5 are the same as in the exhaust heat recovery operation in the first operating state.

When the air-conditioning and hot water supply system 1 is set to the second operating state to perform the exhaust heat recovery operation by carrying out cooling operation in the air-conditioning cycle and hot water supply operation in the hot water supply cycle, the hot-water-supply refrigerant circulating in the hot-water-supply refrigerant circuit 2 is distributed between the intermediate heat exchanger 11 and the heat exchanger 24 on the hot-water-supply heat source side for circulation. The hot-water-supply refrigerant absorbs heat from the air-conditioning refrigerant passing through the intermediate heat exchanger 11.

Further, where the air-conditioning heat radiation amount is not sufficient for the hot water supply heat absorption amount, the hot-water-supply refrigerant can absorb the lacking quantity of heat from the atmosphere in the heat exchanger 24 on the hot-water-supply heat source side.

With the above-described structure, even when the hot water supply heat absorption amount is larger than the air-conditioning heat radiation amount, it is possible to avoid not having a sufficient quantity of heat supplied to the hot feed water circulating in the hot feed water circuit 4. The heat recovered from the living space may be utilized as a heat source for the hot feed water.

Also, when setting the air-conditioning and hot water supply system 1 to the second operating state to start the exhaust heat recovery operation, the controller 1a starts cooling operation and hot water supply operation with the air-conditioning refrigerant flow control valves 30a and 30b and the hot-water-supply refrigerant flow control valves 20a and 20b closed. Subsequently, after starting the operation of the hot-water-supply outdoor fan 25, the controller 1a opens the hot-water-supply refrigerant flow control valves 20a and 20b to cancel the limitation on the inflow of the hot-water-supply refrigerant into the heat exchanger 24 on the hot-water-supply heat source side. This structure makes it possible for the controller 1a to set the air-conditioning and hot water supply system 1 to the second operating state while keeping the hot water supply cycle operation stable, so that the exhaust heat recovery operation can be started in the stable state.

### «Third operating state»

Where the air-conditioning heat radiation amount is larger than the hot water supply heat absorption amount, the controller 1a sets operational status to the third operating state in which cooling operation is performed in the air-conditioning cycle and hot water supply operation is conducted in the hot water supply cycle in carrying out the exhaust heat recovery operation.

In the third operating state, as shown in Fig. 2, the heat exchanger 24 on the hot-water-supply heat source side in the hot-water-supply refrigerant circuit 2 (hot water supply cycle) is not used. The heat exchanger 22 on the hot-water-supply use side is used as a condenser and the intermediate heat exchanger 11 as an evaporator. The heat exchanger 34 on the air-conditioning use side in the air-conditioning refrigerant circuit 3 (air-conditioning cycle) is used as an evaporator. The heat exchanger 32 on the air-conditioning heat source side and the intermediate heat exchanger 11 are used as condensers. Further, the air-conditioning compressor 31 and hot-water-supply compressor 21 are operated.

In the third operating state, the controller 1a should preferably control the air-conditioning and hot water supply system 1 in such a manner that the air-conditioning refrigerant circulating in the air-conditioning refrigerant circuit 3 is distributed suitably between the intermediate heat exchanger 11 and the heat exchanger 32 on the air-conditioning heat source side for circulation and that the heat radiation amount of the air-conditioning refrigerant in the intermediate heat exchanger 11 becomes equal to the hot water supply heat absorption amount.

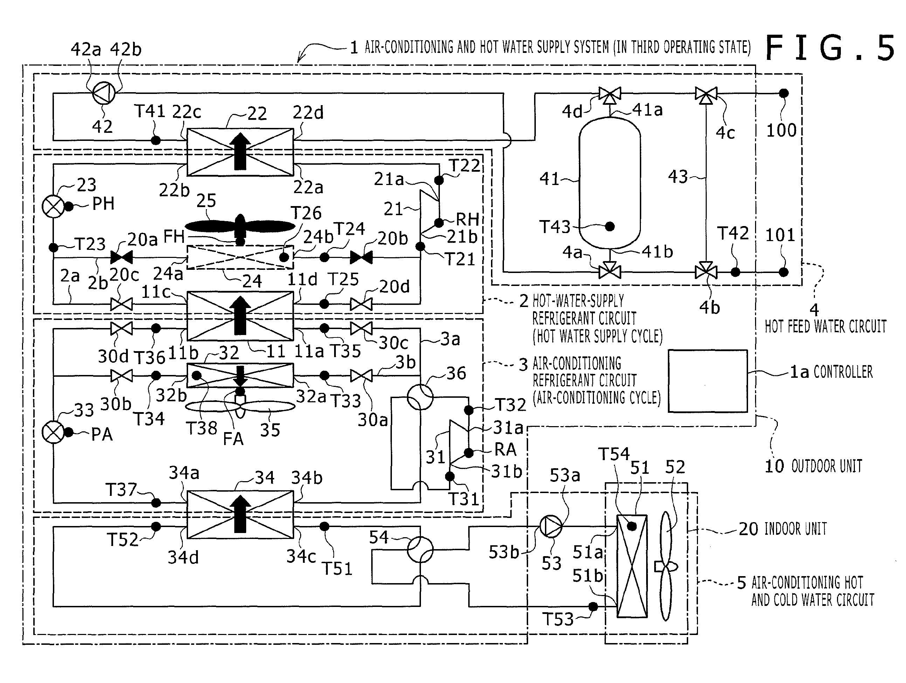

Specifically, as shown in Fig. 5, the controller 1a sets the four-way valve 36 to the first state and the four-way valve 54 to the second state. Also, the controller 1a opens the air-conditioning refrigerant flow control valves 30a through 30d and the hot-water-supply refrigerant flow control valves 20c and 20d, and closes the hot-water-supply refrigerant flow control valves 20a and 20b. The controller 1a then operates the air-conditioning outdoor fan 35 and stops the hot-water-supply outdoor fan 25.

Further, the controller 1a sets the three-way valve 4a to the first state and the three-way valve 4d also to the first state. The controller 1a then operates the hot feed water circulating pump 42.

In this case, if the intermediate heat exchanger 11 and the heat exchanger 32 on the air-conditioning heat source side arranged in parallel with each other are both operated as condensers of the air-conditioning refrigerant, there occurs the problem of being unable to distribute the air-conditioning refrigerant suitably between the intermediate heat exchanger 11 and the heat exchanger 32 on the air-conditioning heat source side. That is because the target with which the air-conditioning refrigerant exchanges heat is the hot-water-supply refrigerant in the intermediate heat exchanger 11 and the atmosphere in the heat exchanger 32 on the air-conditioning heat source side. That is, the target that permits heat exchange with the air-conditioning refrigerant differs between the intermediate heat exchanger 11 and the heat exchanger 32 on the air-conditioning heat source side.

For example, suppose that while performing cooling operation individually in the air-conditioning cycle, the air-conditioning and hot water supply system 1 is set to the third operating state to start hot water supply operation in the hot water supply cycle. In this case, the hot-water-supply refrigerant is not ready sufficiently to absorb heat immediately after the hot water supply operation is started, so that the air-conditioning refrigerant passing through the intermediate heat exchanger 11 cannot release sufficient heat. In the intermediate heat exchanger 11, the thermal resistance of the passage for the air-conditioning refrigerant is raised, which reduces the amount of the air-conditioning refrigerant passing through the intermediate heat exchanger 11. Thus the air-conditioning refrigerant is distributed in such a manner that the amount of the air-conditioning refrigerant flowing into the intermediate heat exchanger 11 drops while the inflow of the air-conditioning refrigerant into the heat exchanger 32 on the air-conditioning heat source side increases.

Where the air-conditioning refrigerant is not appropriately distributed as in the above case, the heat of the air-conditioning refrigerant passing through the intermediate heat exchanger 11 can be hardly absorbed. In its high-temperature, high-pressure gaseous state, the air-conditioning refrigerant (G) flows out of the intermediate heat exchanger 11 and joins the air-conditioning refrigerant (L) condensed (liquefied) in the heat exchanger 32 on the air-conditioning heat source side upstream of the air-conditioning expansion valve 33. The mixture of the gaseous air-conditioning refrigerant (G) with the liquefied air-conditioning refrigerant (L) increases the volume of the air-conditioning refrigerant passing through the air-conditioning expansion valve 33. This places the air-conditioning refrigerant circuit 3 in an unstable state in which a blocked passage is liable to occur.

The controller 1a of this embodiment is arranged to set the air-conditioning and hot water supply system 1 to the third operating state to start the exhaust heat recovery operation without putting the air-conditioning refrigerant circuit 3 in an unstable state. Specifically, at the start of the exhaust heat recovery operation, the controller 1a controls (closes) the air-conditioning refrigerant flow control valves 30a and 30b to limit the inflow of the air-conditioning refrigerant into the heat exchanger 32 on the air-conditioning heat source side, stops the air-conditioning outdoor fan 35, controls (closes) the hot-water-supply refrigerant flow control valves 20a and 20b to limit the inflow of the hot-water-supply refrigerant into the heat exchanger 24 on the hot-water-supply heat source side, and stops the hot-water-supply outdoor fan 25. The controller 1a then opens the air-conditioning refrigerant flow control valves 30c and 30d and the hot-water-supply refrigerant flow control valves 20c and 20d, and starts cooling operation in the air-conditioning cycle and hot water supply operation in the hot water supply cycle.

In this state, the controller 1a adjusts the revolution speeds of the air-conditioning compressor 31 and hot-water-supply compressor 21, and also adjusts the openings of the air-conditioning expansion valve 33 and hot-water-supply expansion valve 23. The openings of the air-conditioning expansion valve 33 and hot-water-supply expansion valve 23 are adjusted in accordance with the target temperature set by the user for the living space (set temperature for cooling operation), the boiling temperature of the hot feed water, and the like.

The controller 1a monitors the temperature of the hot-water-supply refrigerant in the intermediate heat exchanger 11 (temperature of the hot-water-supply refrigerant at the second connection port 11d on the hot water supply side) by use of measurement signals input from the temperature sensor T25. When the temperature of the hot-water-supply refrigerant reaches a predetermined target value, the controller 1a starts to operate the air-conditioning outdoor fan 35, before controlling (opening) the air-conditioning refrigerant flow control valves 30a and 30b to cancel the limitation on the inflow of the air-conditioning refrigerant into the heat exchanger 32 on the air-conditioning heat source side.

In the third operating state, the controller 1a should also be arranged preferably to first operate the air-conditioning outdoor fan 35 and then to open the air-conditioning refrigerant flow control valves 30a and 30b. This structure permits heat exchange between the air-conditioning refrigerant and the atmosphere immediately after the air-conditioning refrigerant has started passing through the heat exchanger 32 on the air-conditioning heat source side. In this manner, the controller 1a can stabilize cooling operation in the air-conditioning cycle.

The target temperature of the hot-water-supply refrigerant in effect when the controller 1a opens the air-conditioning refrigerant flow control valves 30a and 30b may be the temperature determined beforehand in experiments on the basis of the boiling temperature in the hot water supply cycle, the temperature of the hot feed water stored in the hot water storage tank 41 and the like. For example, the controller 1a may be arranged to set the target temperature value on the basis of the boiling temperature and the temperature of the stored hot feed water with reference to a chart showing the relations involving the boiling temperature, the temperature of the stored hot feed water, and the target temperature of the hot-water-supply refrigerant.

When the air-conditioning and hot water supply system 1 is set to the third operating state in the above-described steps and starts performing the exhaust heat recovery operation, a high-temperature, high-pressure air-conditioning refrigerant (G) delivered from the air-conditioning compressor 31 flows via the four-way valve 36 into the intermediate heat exchanger 11 and the heat exchanger 32 on the air-conditioning heat source side. The air-conditioning refrigerant (G) flowing into the intermediate heat exchanger 11 releases its heat to the low-temperature hot-water-supply refrigerant (B) to condense and liquefy. Meanwhile, the air-conditioning refrigerant (G) flowing into the heat exchanger 32 on the air-conditioning heat source side releases its heat into the atmosphere to condense and liquefy. The streams of the air-conditioning refrigerant (L) liquefied in the intermediate heat exchanger 11 and in the heat exchanger 32 on the air-conditioning heat source side converge to flow at high pressure state into the air-conditioning expansion valve 33 with a predetermined opening for decompression and expansion. The refrigerant thus turns into a low-temperature, low-pressure, two-phase-state air-conditioning refrigerant (B) before flowing into the heat exchanger 34 on the air-conditioning use side.

The air-conditioning refrigerant (B) flowing into the heat exchanger 34 on the air-conditioning use side absorbs heat from the relatively high-temperature air-conditioning use side refrigerant (L) circulating inside the air-conditioning hot and cold water circuit 5 and is evaporated and gasified thereby. The refrigerant turns into a low-pressure air-conditioning refrigerant (G). The refrigerant (G) is then compressed with the air-conditioning compressor 31.

In the hot-water-supply refrigerant circuit 2, the hot-water-supply refrigerant compressed with the hot-water-supply compressor 31 into a high-temperature, high-pressure hot-water-supply refrigerant (G) flows into the heat exchanger 22 on the hot-water-supply use side. In the heat exchanger 22 on the hot-water-supply use side, the hot-water-supply refrigerant (G) releases its heat to the hot feed water circulating in the hot feed water circuit 4 to condense and liquefy. The liquefied hot-water-supply refrigerant (L) expands and decompresses in the hot-water-supply expansion valve 23 with a predetermined opening at high pressure, becoming a low-temperature, low-pressure, two-phase-state hot-water-supply refrigerant (B). This hot-water-supply refrigerant (B) absorbs heat from the air-conditioning refrigerant (G) in the intermediate heat exchanger 11 to evaporate. The refrigerant thus turns into a low-pressure, gaseous hot-water-supply refrigerant (G) before being sucked into the hot-water-supply compressor 21 for compression. After being compressed, the refrigerant flows into the heat exchanger 22 on the hot-water-supply use side.

Incidentally, the passage of the hot feed water through the hot feed water circuit 4 and the circulation of the air-conditioning use side refrigerant in the air-conditioning hot and cold water circuit 5 are the same as in the exhaust heat recovery operation in the first operating state.

When the air-conditioning and hot water supply system 1 is set to the third operating state to perform the exhaust heat recovery operation by carrying out cooling operation in the air-conditioning cycle and hot water supply operation in the hot water supply cycle, the air-conditioning refrigerant circulating in the air-conditioning refrigerant circuit 3 is distributed between the intermediate heat exchanger 11 and the heat exchanger 32 on the air-conditioning heat source side. The hot-water-supply refrigerant absorbs heat from the air-conditioning refrigerant passing through the intermediate heat exchanger 11.

An excess portion of the air-conditioning heat radiation amount exceeding the hot water supply heat absorption amount is released into the atmosphere from the heat exchanger 32 on the air-conditioning heat source side. The air-conditioning heat radiation amount equal to the hot water supply heat absorption amount is absorbed into the hot-water-supply refrigerant.

With the above-described structure, when the air-conditioning heat radiation amount is larger than the hot water supply heat absorption amount, it is possible to avoid having an excess quantity of heat supplied to the hot feed water circulating in the hot feed water circuit 4. The heat recovered from the living space may be utilized as a heat source for the hot feed water.

Also, when setting the air-conditioning and hot water supply system 1 to the third operating state to start the exhaust heat recovery operation, the controller 1a starts cooling operation and hot water supply operation with the air-conditioning refrigerant flow control valves 30a and 30b and the hot-water-supply refrigerant flow control valves 20a and 20b closed. Subsequently, after starting the operation of the air-conditioning outdoor fan 35, the controller 1a opens the air-conditioning refrigerant flow control valves 30a and 30b to cancel the limitation on the inflow of the air-conditioning refrigerant into the heat exchanger 32 on the air-conditioning heat source side. This structure makes it possible for the controller 1a to set the air-conditioning and hot water supply system 1 to the third operating state while keeping the air-conditioning cycle operation stable, so that the exhaust heat recovery operation can be started in the stable state.

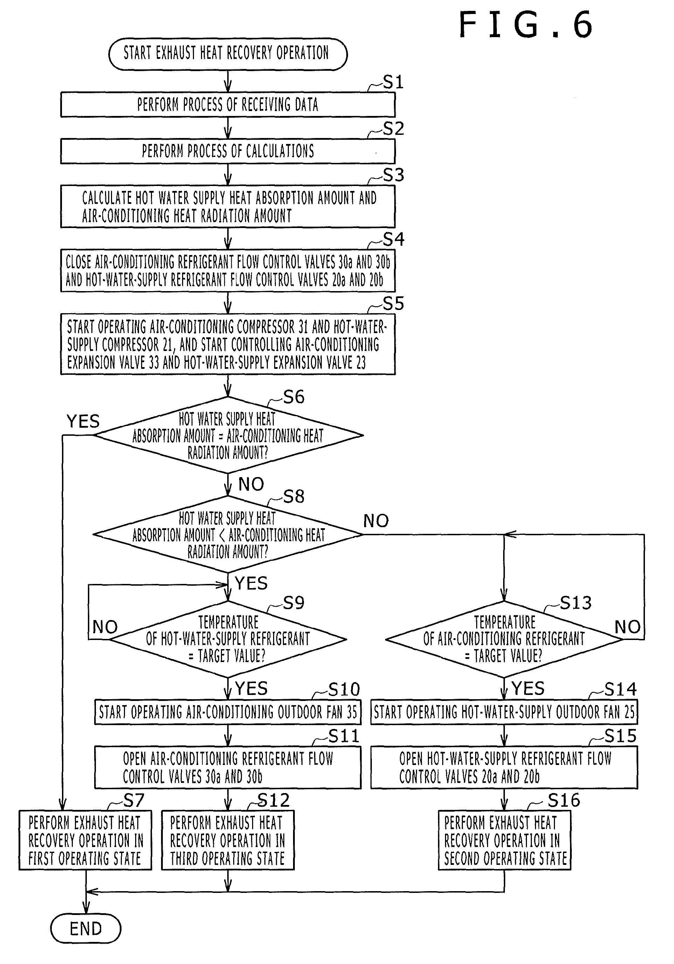

Fig. 6 is a flowchart showing the steps in which the controller sets the air-conditioning and hot water supply system to the first, the second, or the third operating state to start the exhaust heat recovery operation. When the user demands that the air-conditioning and hot water supply system 1 perform cooling operation and hot water supply operation simultaneously, the controller 1a causes the air-conditioning and hot water supply system 1 to start the exhaust heat recovery operation in the steps shown in Fig. 6 (see Figs 1 through 5 as needed).

Upon starting the exhaust heat recovery operation, the controller 1a performs the process of receiving data (step S1). Specifically, the controller 1a acquires data indicative of the temperature of the hot feed water in the hot water storage tank 41, the target temperature for the hot water supply cycle (boiling temperature), the target quantity (flow rate) of the hot feed water supplied to the user through the feed end 100, and the temperature of the hot feed water (feed water temperature) flowing in through the feed-water inlet 101. Also, the controller 1a acquires data representative of the target room temperature in the air-conditioning cycle (set temperature for cooling operation), the target air flow rate, and the room temperature of the living space.

The target hot water temperature and the target amount of hot water in the hot water supply cycle and the target room temperature and the target air flow rate in the air-conditioning cycle are the values demanded by the user. The controller 1a receives the data indicate of the target hot water temperature, target amount of hot water, target room temperature, and target air flow rate, using operation command signals input from a remote controller operated by the user, for example.

Also, the controller 1a receives the temperature of the stored hot feed water using measurement signals input from the temperature sensor T43, receives the data indicative of the feed water temperature in the hot water supply cycle using measurement signals input from the temperature sensor T42, and receives the data indicative of the room temperature in the air-conditioning cycle using measurement signals input from the temperature sensor T54.

The controller 1a performs the process of calculations on the basis of the received data (step S2).

Specifically, the controller 1a calculates the target cooling capacity in the air-conditioning cycle, the target revolution speed and power consumption of the air-conditioning compressor 31, and a target evaporating temperature Te of the air-conditioning refrigerant. Also, the controller 1a calculates the target hot water supply capacity in the hot water supply cycle, the target revolution speed and power consumption of the hot-water-supply compressor 21, and a target delivery temperature Td of the hot-water-supply refrigerant.

Furthermore, the controller 1a calculates the hot water supply heat absorption amount from the difference between the target hot water supply capacity and the power consumption of the hot-water-supply compressor 21, and calculates the air-conditioning heat radiation amount from the sum of the target cooling capacity and the power consumption of the air-conditioning compressor 31 (step S3). To the calculations performed by the controller 1a in steps S2 and S3, known techniques regarding an air-conditioning and hot water supply system configured to be equivalent to the air-conditioning and hot water supply system 1 of this embodiment can be applied.

The controller 1a then closes the air-conditioning refrigerant flow control valves 30a and 30b and the hot-water-supply refrigerant flow control valves 20a and 20b (step S4), and starts to operate the air-conditioning compressor 31 and hot-water-supply compressor 21 in accordance with the result of the calculations in step S2. Specifically, the controller 1a operates the air-conditioning compressor 31 and hot-water-supply compressor 21 at the revolution speeds calculated in step S2. The controller 1a also starts to control the air-conditioning expansion valve 33 and hot-water-supply expansion valve 23 (step S5).

By closing the air-conditioning refrigerant flow control valve 30a and the hot-water-supply refrigerant flow control valve 20a, it is possible to block the inflow of the air-conditioning refrigerant into the heat exchanger 32 on the air-conditioning heat source side and the inflow of the hot-water-supply refrigerant into the heat exchanger 24 on the hot-water-supply heat source side regardless of the magnitude relationship between the air-conditioning heat radiation amount and the hot water supply heat absorption amount.

And as described above, the air-conditioning expansion valve 33 and hot-water-supply expansion valve 23 are controlled so that their openings are adjusted in accordance with the target temperature set by the user for the living space (set temperature for cooling operation) and the boiling temperature of the hot feed water.

The controller 1a then compares the hot water supply heat absorption amount with the air-conditioning heat radiation amount, both calculated in step S3 (step S6).

If the difference between the hot water supply heat absorption amount and the air-conditioning heat radiation amount is within a predetermined range, the controller 1a determines that the hot water supply heat absorption amount is equal to (=) the air-conditioning heat radiation amount (step S6 → Yes), sets the first operating state, and performs the exhaust heat recovery operation (step S7). That is, the controller 1a carries out the exhaust heat recovery operation with the air-conditioning refrigerant flow control valves 30a and 30b and the hot-water-supply refrigerant flow control valves 20a and 20b closed.

If the difference between the hot water supply heat absorption amount and the air-conditioning heat radiation amount is not within the predetermined range, the controller 1a determines that the hot water supply heat absorption amount is not equal to the air-conditioning heat radiation amount (step S6 → No), and compares the two amounts for the magnitude relationship therebetween (step S8).

If the hot water supply heat absorption amount is smaller than (<) the air-conditioning heat radiation amount (step S8 → Yes), the controller 1a calculates the temperature of the hot-water-supply refrigerant in the intermediate heat exchanger 11 on the basis of measurement signals input from the temperature sensor T25 attached to the second connection port 11d of the intermediate heat exchanger 11 (i.e., temperature of the hot-water-supply refrigerant at the second connection port 11d on the hot water supply side). The controller 1a waits for the temperature of the hot-water-supply refrigerant to reach a predetermined target value (step S9 → No). When the temperature of the hot-water-supply refrigerant has reached the predetermined target value (step S9 → Yes), the controller 1a starts to operate the air-conditioning outdoor fan 35 (step S10), and opens the air-conditioning refrigerant flow control valves 30a and 30b (step S11). At this point, the controller 1a fully opens the air-conditioning refrigerant flow control valves 30a and 30b.

In this manner, the controller 1a sets the third operating state and carries out the exhaust heat recovery operation (step S12).

Alternatively, instead of waiting for the temperature of the hot-water-supply refrigerant to reach the target value, the controller 1a may be arranged to start operating the air-conditioning outdoor fan 35 when, for example, the pressure of the hot-water-supply refrigerant in the intermediate heat exchanger 11 reaches a predetermined pressure level and to open the air-conditioning refrigerant flow control valves 30a and 30b accordingly. That is, the controller 1a may be arranged to start operating the air-conditioning outdoor fan 35 and to open the air-conditioning refrigerant flow control valves 30a and 30b in keeping with the status of the hot-water-supply refrigerant such as its temperature or pressure.

If the hot water supply heat absorption amount is not smaller than the air-conditioning heat radiation amount in step S8, i.e., if the hot water supply heat absorption amount is larger than (>) the air-conditioning heat radiation amount (step S8 → No), the controller 1a calculates the temperature of the air-conditioning refrigerant in the intermediate heat exchanger 11 on the basis of measurement signals input from the temperature sensor T3 attached to the second connection port 11b on the air-conditioning side in the intermediate heat exchanger 11 (i.e., temperature of the air-conditioning refrigerant at the second connection port 11 on the air-conditioning side). The controller 1a waits for the calculated temperature of the air-conditioning refrigerant to reach a predetermined target value (step S13 → No). When the air-conditioning condensation temperature has reached the predetermined target value (step S13 → Yes), the controller 1a starts to operate the hot-water-supply outdoor fan 25 (step S14) and opens the hot-water-supply refrigerant flow control valves 20a and 20b (step S15). At this point, the controller 1a fully opens the hot-water-supply refrigerant flow control valves 20a and 20b.

In this manner, the controller 1a sets the second operating state and carries out the exhaust heat recovery operation (step S16).

Alternatively, instead of waiting for the temperature of the air-conditioning refrigerant in the intermediate heat exchanger 11 to reach the target value, the controller 1a may be arranged to start operating the hot-water-supply outdoor fan 25 when, say, the pressure of the air-conditioning refrigerant in the intermediate heat exchanger 11 reaches a predetermined pressure level and to open the hot-water-supply refrigerant flow control valves 20a and 20b accordingly. That is, the controller 1a may be arranged to start operating the hot-water-supply outdoor fan 25 and to open the hot-water-supply refrigerant flow control valves 20a and 20b in keeping with the status of the air-conditioning refrigerant such as its temperature or pressure.

As mentioned above, the air-conditioning refrigerant flow control valve 30a and the hot-water-supply refrigerant flow control valve 20a may be a flow adjustment valve each. Instead of closing the air-conditioning refrigerant flow control valve 30a and the hot-water-supply refrigerant flow control valve 20a, the controller 1a may be arranged to reduce the openings of these valves in step S4. By reducing the opening of the air-conditioning refrigerant flow control valve 30a, the controller 1a can limit the inflow of the air-conditioning refrigerant into the heat exchanger 32 on the air-conditioning heat source side. And by reducing the opening of the hot-water-supply refrigerant flow control valve 20a, the controller 1a can limit the inflow of the hot-water-supply refrigerant into the heat exchanger 24 on the hot-water-supply heat source side. In this case, the controller 1a should preferably be arranged not to close the air-conditioning refrigerant flow control valve 30b and the hot-water-supply refrigerant flow control valve 20b.

For example, suppose that while cooling operation is being performed individually in the air-conditioning cycle, the controller 1a starts hot water supply operation in the hot water supply cycle to let the air-conditioning and hot water supply system 1 initiate the exhaust heat recovery operation. In this case, when the inflow of the air-conditioning refrigerant into the heat exchanger 32 on the air-conditioning heat source side is blocked, insufficient heat exchange between the air-conditioning refrigerant and the hot-water-supply refrigerant in the intermediate heat exchanger 11 may leave the air-conditioning refrigerant insufficiently cooled, which can lead to a rise in temperature in the living space.

Thus the air-conditioning refrigerant is arranged also to flow into the heat exchanger 32 on the air-conditioning heat source side at the start of the exhaust heat recovery operation so that the heat exchanger 32 on the air-conditioning heat source side can cool the air-conditioning refrigerant. This structure allows the air-conditioning refrigerant to be cooled by the heat exchanger 32 on the air-conditioning heat source side so that the rise in temperature in the living space can be suppressed.

The opening of the air-conditioning refrigerant flow control valve 30a as a flow adjustment valve set with the controller 1a in step S4 should preferably be within a range to suppress the temperature change (temperature rise) in the living space in such a manner that the user will not notice the temperature rise.

Likewise, suppose that while hot water supply operation is being performed individually in the hot water supply cycle, the controller 1a starts cooling operation in the air-conditioning cycle to let the air-conditioning and hot water supply system 1 initiate the exhaust heat recovery operation. In this case, when the inflow of the hot-water-supply refrigerant into the heat exchanger 24 on the hot-water-supply heat source side is blocked, insufficient heat exchange between the air-conditioning refrigerant and the hot-water-supply refrigerant in the intermediate heat exchanger 11 may leave the hot-water-supply refrigerant insufficiently heated, which can lead to a drop in boiling temperature.

Thus the hot-water-supply refrigerant is arranged also to flow into the heat exchanger 24 on the hot-water-supply heat source side at the start of the exhaust heat recovery operation so that the hot-water-supply refrigerant can absorb heat in the heat exchanger 24 on the hot-water-supply heat source side. This structure allows the hot-water-supply refrigerant to absorb heat in the heat exchanger 24 on the hot-water-supply heat source side so that a drop in boiling temperature can be suppressed.

The opening of the hot-water-supply refrigerant flow control valve 20a as a flow adjustment valve set with the controller 1a in step S4 should preferably be such that the drop in boiling temperature falls within a permissible range.

Also, when calculating the hot water supply heat absorption amount and the air-conditioning heat radiation amount in step S3 for example, the controller 1a may be arranged to evacuate the air-conditioning refrigerant from the heat exchanger 32 on the air-conditioning heat source side and the hot-water-supply refrigerant from the heat exchanger 24 on the hot-water-supply heat source side before closing the air-conditioning refrigerant flow control valves 30a and 30b and the hot-water-supply refrigerant flow control valves 20a and 20b. This arrangement is provided so that when at least either the heat exchanger 32 on the air-conditioning heat source side or the heat exchanger 24 on the hot-water-supply heat source side is not used during the exhaust heat recovery operation, the air-conditioning refrigerant or the hot-water-supply refrigerant will not dwell in the unused heat exchanger 32 or 24 in order to put all the refrigerants to maximum use.

Specifically, when the air-conditioning heat radiation amount is smaller than the hot water supply heat absorption amount, the controller 1a sets the four-way valve 36 to the second state, closes the air-conditioning refrigerant flow control valve 30b and the air-conditioning expansion valve 33, and operates the air-conditioning compressor 31. The air-conditioning refrigerant in the heat exchanger 32 on the air-conditioning heat source side is sucked into the air-conditioning compressor 31 via the air-conditioning refrigerant flow control valve 30a, whereby the air-conditioning refrigerant is evacuated from the heat exchanger 32 on the air-conditioning heat source side. When the air-conditioning refrigerant has been evacuated from the heat exchanger 32 on the air-conditioning heat source side, the controller 1a closes the air-conditioning refrigerant flow control valve 30a and stops the operation of the air-conditioning compressor 31. The controller 1a further sets the four-way valve 3 to the first state.

For example, if there is provided a structure involving a pressure gauge that measures the pressure of the air-conditioning refrigerant in the heat exchanger 32 on the air-conditioning heat source side, the controller 1a can recognize that all air-conditioning refrigerant has been evacuated from the heat exchanger 32 on the air-conditioning heat source side when that pressure gauge detects a vacuum state therein.

And when the hot water supply heat absorption amount is smaller than the air-conditioning heat radiation amount, the controller 1a closes the hot-water-supply refrigerant flow control valve 20a and the hot-water-supply expansion valve 23, and operates the hot-water-supply compressor 21. The hot-water-supply refrigerant in the heat exchanger 24 on the hot-water-supply heat source side is sucked into the hot-water-supply compressor 21 via the hot-water-supply refrigerant flow control valve 20b, whereby the hot-water-supply refrigerant is evacuated from the heat exchanger 24 on the hot-water-supply heat source side. When the hot-water-supply refrigerant has been evacuated from the heat exchanger 24 on the hot-water-supply heat source side, the controller 1a closes the hot-water-supply refrigerant flow control valve 20b and stops the operation of the hot-water-supply compressor 21.

For example, if a structure is provided which involves a pressure gauge that measures the pressure of the hot-water-supply refrigerant in the heat exchanger 24 on the hot-water-supply heat source side, the controller 1a can recognize that all hot-water-supply refrigerant has been evacuated from the heat exchanger 24 on the hot-water-supply heat source side when that pressure gauge detects a vacuum state therein.

As described above, when the user demands cooling operation and hot water supply operation simultaneously, the air-conditioning and hot water supply system 1 of this embodiment (see Fig. 1) can perform the exhaust heat recovery operation regardless of the magnitude relationship between the hot water supply heat absorption amount in the hot water supply cycle and the air-conditioning heat radiation amount in the air-conditioning cycle.

Also, upon switchover from the individual hot water supply cycle or air-conditioning cycle operation to the exhaust heat recovery operation, the controller 1a (see Fig. 1) limits the refrigerant inflows into the heat exchanger 24 on the hot-water-supply heat source side (see Fig. 1) and into the heat exchanger 32 on the air-conditioning heat source side (see Fig. 1) at the start of the exhaust heat recovery operation. This structure allows the refrigerant to flow preferentially into the intermediate heat exchanger 11 (see Fig. 1) into which the refrigerant inflow tends to be hampered by thermal resistance at the start of the exhaust heat recovery operation. This makes it possible to prevent the air-conditioning refrigerant circuit 3 (see Fig. 1) from operating in an unstable state.

And with the limitations set on the refrigerant inflows into the heat exchanger 24 on the hot-water-supply heat source side (see Fig. 1) and into the heat exchanger 32 on the air-conditioning heat source side (see Fig. 1), the controller 1a (see Fig. 1) cancels the limitations when the temperature of the hot-water-supply refrigerant and that of the air-conditioning refrigerant have reached their target values, thus allowing the refrigerant to flow into the heat exchanger 24 or 32.

With this structure, it is possible suitably to distribute the refrigerant circulating in the cycle on the larger exhaust heat amount side between the intermediate heat exchanger 11 for exhaust heat recovery (see Fig. 1) on the one hand and the heat source side heat exchangers (heat exchanger 32 on the air-conditioning heat source side and heat exchanger 24 on the hot-water-supply heat source side) on the other hand, whereby the stable exhaust heat recovery operation is guaranteed. In this manner, an economically operable air-conditioning and hot water supply system 1 and a method for operating that system 1 can be provided.

Whereas the embodiment above is structured as an exhaust heat recovery system composed of an air-conditioning and hot water supply system 1 targeted to cool the air-conditioning use side refrigerant absorbing heat from the air in the living space and to heat the hot feed water supplied to the user, this structure is not limitative of the present invention or its embodiments.

That is, the present invention can be applied extensively to exhaust heat recovery systems that are designed to release the heat absorbed from the object to be cooled to the object to be heated and are not limited to any particular object to be cooled or object to be heated.

1 Air-conditioning and hot water supply system (exhaust heat recovery system)
1a Controller
2 Hot-water-supply refrigerant circuit (second refrigerant circuit)
3 Air-conditioning refrigerant circuit (first refrigerant circuit)
11 Intermediate heat exchanger
20a, 20b Hot-water-supply refrigerant flow control valve (second limiting means)
21 Hot-water-supply compressor (second refrigerant compressor)
24 Heat exchanger on the hot-water-supply heat source side (second heat exchanger)
25 Hot-water-supply outdoor fan (second refrigerant circuit fan)
30a, 30b Air-conditioning refrigerant flow control valve (first limiting means)
31 Air-conditioning compressor (first refrigerant compressor)
32 Heat exchanger on the air-conditioning heat source side (first heat exchanger)
35 Air-conditioning outdoor fan (first refrigerant circuit fan)

## Claims

1. An exhaust heat recovery system comprising a first refrigerant circuit in which a first refrigerant circulates and a second refrigerant circuit in which a second refrigerant circulates, the first and the second refrigerant circuits being thermally connected with each other via an intermediate heat exchanger in which the first and the second refrigerants exchange heat therebetween;
wherein the first refrigerant circuit includes:
a first heat exchanger arranged in parallel with the intermediate heat exchanger with regard to the flow of the first refrigerant, the first heat exchanger permitting heat exchange between the first refrigerant and the atmosphere, and
first limiting means which limits the inflow of the first refrigerant into the first heat exchanger;
wherein the second refrigerant circuit includes:
a second heat exchanger arranged in parallel with the intermediate heat exchanger with regard to the flow of the second refrigerant, the second heat exchanger permitting heat exchange between the second refrigerant and the atmosphere, and
second limiting means which limits the inflow of the second refrigerant into the second heat exchanger;
wherein there is further provided a controller controlling an exhaust heat recovery operation in a manner allowing the intermediate heat exchanger to let the second refrigerant absorb the heat which was absorbed by the first refrigerant from an object to be cooled while circulating in the first refrigerant circuit and to let the second refrigerant release the heat to an object to be heated while circulating in the second refrigerant circuit, and
wherein the controller controls the first limiting means to limit the inflow of the first refrigerant into the first heat exchanger and also controls the second limiting means to limit the inflow of the second refrigerant into the second heat exchanger at the start of the exhaust heat recovery operation.

2. The exhaust heat recovery system according to claim 1, wherein, after the start of the exhaust heat recovery operation, the controller compares the amount of heat that can be radiated by the first refrigerant with the amount of heat that can be absorbed by the second refrigerant;
wherein, if the heat radiation amount is larger than the heat absorption amount, the controller causes the first limiting means to cancel the limitation on the inflow of the first refrigerant into the first heat exchanger in accordance with status of the second refrigerant, and
wherein, if the heat radiation amount is less than the heat absorption amount, the controller causes the second limiting means to cancel the limitation on the inflow of the second refrigerant into the second heat exchanger in accordance with status of the first refrigerant.

3. The exhaust heat recovery system according to claim 2, wherein, before causing the first limiting means to cancel the limitation on the inflow of the first refrigerant into the first heat exchanger, the controller operates a first refrigerant circuit fan to feed air to the first heat exchanger, and
wherein, before causing the second limiting means to cancel the limitation on the inflow of the second refrigerant into the second heat exchanger, the controller operates a second refrigerant circuit fan to feed air to the second heat exchanger.

4. The exhaust heat recovery system according to any one of claims 1 through 3, where the first limiting means is interposed between the first heat exchanger and a first refrigerant compressor for compressing the first refrigerant for circulation within the first refrigerant circuit, and
wherein the second limiting means is interposed between the second heat exchanger and a second refrigerant compressor for compressing the second refrigerant for circulation within the second refrigerant circuit.

5. A method for operating an exhaust heat recovery system including a first refrigerant circuit in which a first refrigerant circulates and a second refrigerant circuit in which a second refrigerant circulates, the first and the second refrigerant circuits being thermally connected with each other via an intermediate heat exchanger in which the first and the second refrigerants exchange heat therebetween;
wherein the first refrigerant circuit includes:
a first heat exchanger arranged in parallel with the intermediate heat exchanger with regard to the flow of the first refrigerant, the first heat exchanger permitting heat exchange between the first refrigerant and the atmosphere, and
first limiting means which limits the inflow of the first refrigerant into the first heat exchanger;
wherein the second refrigerant circuit includes:
a second heat exchanger arranged in parallel with the intermediate heat exchanger with regard to the flow of the second refrigerant, the second heat exchanger permitting heat exchange between the second refrigerant and the atmosphere, and
second limiting means which limits the inflow of the second refrigerant into the second heat exchanger, and
wherein there is further provided a controller controlling an exhaust heat recovery operation in a manner allowing the intermediate heat exchanger to let the second refrigerant absorb the heat which was absorbed by the first refrigerant from an object to be cooled while circulating in the first refrigerant circuit and to let the second refrigerant release the heat to an object to be heated while circulating in the second refrigerant circuit, the method comprising the steps of:
causing the controller to control the first limiting means to limit the inflow of the first refrigerant into the first heat exchanger at the start of the exhaust heat recovery operation;
causing the controller also to control the second limiting means to limit the inflow of the second refrigerant into the second heat exchanger at the start of the exhaust heat recovery operation;
causing the controller to compare the amount of heat that can be radiated by the first refrigerant with the amount of heat that can be absorbed by the second refrigerant;
if the heat radiation amount is larger than the heat absorption amount, then causing the controller to control the first limiting means to cancel the limitation on the inflow of the first refrigerant into the first heat exchanger in accordance with status of the second refrigerant, and
if the heat radiation amount is less than the heat absorption amount, then causing the controller to control the second limiting means to cancel the limitation on the inflow of the second refrigerant into the second heat exchanger in accordance with status of the first refrigerant.

6. The method for operating the exhaust heat recovery system according to claim 5, further comprising the steps of:
before cancelling the limitation on the inflow of the first refrigerant into the first heat exchanger, allowing the controller to operate a first refrigerant circuit fan for feeding air to the first heat exchanger, and
before cancelling the limitation on the inflow of the second refrigerant into the second heat exchanger, allowing the controller to operate a second refrigerant circuit fan for feeding air to the second heat exchanger.
